# EUROPEAN PATENT SPECIFICATION

(11) **EP 0 582 852 B1**
(45) Date of publication and mention of the grant of the patent: **07.01.1998**
(21) Application number: 93111391.4
(22) Date of filing: 15.07.1993
(51) Int. Cl.: G03B 17/30

(54) **Apparatus and method of loading and removing photographic film in a photographic film cassette**
Gerät und Verfahren zum Laden und Entfernen eines Filmes in einer photographischen Filmkassette
Dispositif et méthode de chargement et d'enlèvement de film dans une cassette de film photographique

(30) Priority: 15.07.1992 JP 212135/92
(43) Date of publication of application: 16.02.1994
(60) Divisional application: 97105645.2
(73) Proprietor: FUJI PHOTO FILM CO., LTD., Kanagawa (JP)
(72) Inventor: Takahashi, Koichi, c/o Fuji Photo Film Co., Ltd., Minami-Ashigara-shi, Kanagawa (JP); Takatori, Tetsuya, c/o Fuji Photo Film Co., Ltd., Minami-Ashigara-shi, Kanagawa (JP); Ichikawa, Haruo, c/o Fuji Photo Film Co., Ltd., Minami-Ashigara-shi, Kanagawa (JP); Kaya, Akimasa, c/o Fuji Photo Film Co., Ltd., Minami-Ashigara-shi, Kanagawa (JP); Takahashi, Tomoyuki, c/o Fuji Photo Film Co., Ltd., Minami-Ashigara-shi, Kanagawa (JP)
(74) Representative: Grünecker, Kinkeldey, Stockmair & Schwanhäusser Anwaltssozietät

(56) References cited:
- EP-A- 0 442 501
- JP-A- 4 122 925
- US-A- 3 261 237
- US-A- 3 586 258
- US-A- 3 910 516
- US-A- 4 506 843

## Description

### BACKGROUND OF THE INVENTION

### 1. Field of the Invention

The present invention relates to an apparatus and method of loading photographic film into, and removing photographic film from a photographic film cassette.

### 2. Description Related to the Prior Art

Photographic film of the 135 type, contained in a cassette, is marketed in the most prevalent range among other photographic films. The 135 photographic film cassette has a cassette shell constituted of a cylindrical body and two caps, the former formed of a thin metal plate and the latter fitted on the former. The cassette has a spool on which photographic film is wound in a form of a roll and which is contained in the cassette shell. To assemble this photographic film cassette, there are known several methods: U.S.P. 4,614,019 (corresponding to Japanese Patent Publication No. 2-691) discloses a process of winding the photographic film on the spool, and then assembling the cassette while covering the photographic film within the cassette shell by operation in a darkroom; U.S.P. 4,080,711 (corresponding to Japanese Patent Publication No. 60-48748) discloses a process of bringing the assembled cassette shell into the darkroom, disassembling the cassette shell for insertion of the photographic film, inserting the photographic film wound on the spool, and then assembling finally the cassette shell.

U.S.P. 3,910,516 (corresponding to Japanese Patent Laid-open Publication No. 49-107732) and Japanese Patent Laid-open Publication No. 52-77723 also suggest a photographic film cassette producing method constituted of producing an empty cassette incorporated with a spool in an illuminated room, inserting a tongue-like guide plate into a photographic film passage port formed in the cassette, then inserting a trailer of photographic film into the cassette while guided along the guide plate, retaining the trailer on the spool fixedly, rotating the spool so as to wind the photographic film up into the cassette.

Document US-A-3 586 258 also discloses a method and an apparatus for winding a photographic film onto a spool arranged inside a cassette using an insertable guide tongue.

It is also suggested by U.S.P. 4,834,306 and 4,846,418 and European Publication EP-A2 0 406 815 (corresponding to Japanese Patent Laid-open Publication No. 3-37645) to construct a photographic film cassette in which a cassette shell is constituted of parts formed from resin, and rotation of a spool exits a leader of the photographic film to the outside of the cassette. Such a leader-advancing cassette is different from photographic film cassettes conventionally in use, has the leader of the photographic film as fully contained within the cassette both before exposure and after exposure, and thus has advantages in that the photographic film is reliably protected from accidental exposure to ambient light, and no external protrusion of the leader facilitates the manual treatment of the cassette.

To construct the leader-advancing cassette, it is suggested in general to provide the cassette with such parts as have not been incorporated in conventional cassettes. For example, the cassette shell incorporates a light-shielding shutter member arranged openably in the photographic film passage port for projecting the inside from ambient light, or a visual indicator member arranged to appear externally for indicating the condition of the photographic film either unexposed or exposed, otherwise structures as known from U.S.P. 4,834,306 (corresponding to Japanese Patent Laid-open Publication No. 1-306845) and U.S.P. 5,049,912. However, production of such a leader-advancing cassette is involved in many problems due to increase in the number of the parts. Efficiency in manufacture could not be improved, particularly in the assembling operation requiring the light-shielded condition in the darkroom. Operation in the darkroom must be automated, to have additional problems in operability in view of inspection, maintenance, and taking steps to cope with accidents during the operation.

There are problems if a leader-advancing cassette is produced by following the method of U.S.P. 3,910,516 and Japanese Patent Laid-open Publication No. 52-77723. Although the guide plate is first inserted for inserting the trailer into the cassette, there would be strong possibility that the trailer in the course of insertion would be flexed or bent before reaching the spool. After assemblage of the cassette shell in the illuminated room, it is brought in a process of using the guide plate, which guides the insertion of the trailer only in the outermost position of the passage port. All with such guidance of the trailer, possibility of failure in retention of the trailer remains.

After effecting exposure on the photographic film, the exposed photographic film as contained in the cassette is removed from the cassette for a developing process. Although the photographic film is drawn out of the cassette, the photographic film cannot be separated from the spool because the trailer of the photographic film is fixedly retained on the spool. To remove the photographic film from the cassette, it is conventional to cut off the photographic film while leaving a portion of the trailer within the cassette.

Recycling of parts of photographic film cassettes is nowadays conceived, and includes two ways: reusing parts as withdrawn after the first use; and remolding new resinous parts by melting the used resinous parts. It is, however, difficult to reuse such a used cassette, because the trailing portion of the photographic film is attached irremovably on the spool. To remold a resinous cassette from that cut off from the photographic film degrades the quality of the resin to be molded, with the small portion of the photographic film mixed. Therefore the cassette after separation of the photographic film requires such steps as disassembling the cassette shell, and removing the small portion of the photographic film from the spool. There remains a problem in posterior treatment of photographic film cassettes after exposure of photographic film.

### SUMMARY OF THE INVENTION

In view of the foregoing problems, an object of the present invention is to provide an apparatus and a method of loading photographic film into a cassette according to claims 1 and 14, respectively, and removing photographic film from a cassette according to claims 8 and 15, respectively, with high efficiency and reliability, in adaptation to the cassette in which rotation of a spool exits a leader of the photographic film to the outside of the cassette.

Another object of the present invention is to provide an apparatus and method of loading photographic film into a cassette and removing photographic film from a cassette in a preferable manner in view of recycling the parts of the cassette.

In order to achieve the above and other objects and advantages of this invention, holding means holds the cassette shell in a predetermined orientation so as to position the passage port in a predetermined direction. An inserter member inserts the trailer into the cassette shell. The inserter member moves between an inserting position, where the inserter member as passed through the passage port is brought to the spool, and a standby position, where the inserter member exits from the passage port. A pick-up end portion is formed on the inserter member for picking up the trailer, so as to mount the trailer on the spool when the inserter member moves to the inserting position. Spool rotating means rotates the spool in order to wind the photographic film around the spool.

In operation, the trailer is picked with an inserter jig. The inserter jig is brought to the spool, as passed through the passage port, so as to insert the trailer into the cassette shell. The trailer is retained on the spool with the retaining structure. The inserter jig is drawn out of the cassette shell. Then the spool is rotated in order to wind the photographic film around the spool, so as to wind the photographic film up into the cassette shell.

In accordance with the present invention, photographic film can be loaded into a cassette, with high efficiency and reliability, even in adaptation to the cassette in which rotation of the spool exits a leader of the photographic film to the outside of the cassette.

To remove exposed photographic film from a cassette, holding means holds the cassette shell in a predetermined orientation so as to position the passage port in a predetermined direction. Drawing means draws the photographic film until the photographic film stands unwound so that one convolution or less remains wound on the spool. A separator member separates the trailer from the spool. The separator member moves between an inserting position, where the separator member as passed through the passage port is brought to the spool, and a standby position, where the separator member exits from the passage port. The separator member is moved to the inserting position after stopping of the drawing means and releases the trailer from retention on the retaining structure while leaving the spool in the cassette shell.

In operation, the photographic film is drawn until the photographic film stands unwound so that one convolution or less remains wound on the spool. A separator jig is brought into the cassette shell up to the spool, as passed through the passage port. The trailer is released from retention on the retaining structure by use of the separator jig. Then the photographic film is drawn out so as to separate the photographic film from the spool. The photographic film can be removed from a cassette in a preferable manner in view of recycling the parts of the cassette.

A cassette includes at least one retaining hole formed in the trailer. A slot is formed in the spool and extended in an axial direction of the spool for inserting the trailer. At least one retaining claw is formed to project from inside the slot so as to be fitted on the retaining hole, thereby retaining the trailer on the spool. At least one preventive projection is formed to project from inside the slot in a direction opposite to the retaining claw, for preventing the retaining hole from slipping away from the retaining claw. A center of the slot is unintersected with a rotational axis of the spool. The cassette makes it easy to load photographic film into the cassette and remove photographic film from the cassette.

### BRIEF DESCRIPTION OF THE DRAWINGS

The above objects and advantages of the present invention will become more apparent from the following detailed description when read in connection with the accompanying drawings, in which:
Fig. 1 is an exploded perspective view illustrating a cassette;
Fig. 2 is a cross section illustrating a spool incorporated in the cassette in Fig. 1;
Fig. 3 is a front elevation illustrating the spool in Fig. 2;
Fig. 4 is an explanatory view illustrating a shape of a trailer of the photographic film as contained in the cassette in Fig. 1;
Fig. 5 is a perspective view illustrating a novel apparatus for loading the photographic film;
Fig. 6 is a plan view illustrating the loading apparatus in Fig. 5;
Fig. 7 is a side elevation, partly cut away, illustrating the apparatus in Fig. 5;
Fig. 8 is an explanatory view illustrating operation of the apparatus in Fig. 5;
Figs. 9 to 11 are explanatory views illustrating operation in the course of inserting and retaining the trailer on the spool;
Fig. 12 is an explanatory view illustrating the trailer standing retained on the spool;
Figs. 13 and 14 are explanatory views illustrating operation after retaining the trailer on the spool;
Fig. 15 is an explanatory view illustrating another preferred shape of a trailer;
Fig. 16 is an explanatory view illustrating an inserter jig preferable for photographic film having the trailer in Fig. 15;
Fig. 17 is a perspective view illustrating another preferred spool;
Fig. 18 is a cross section illustrating a cassette incorporating the spool in Fig. 17;
Fig. 19 is an explanatory view illustrating a standby position of the trailer to be retained on a spool;
Fig. 20 is an explanatory view illustrating an inserting position of an inserter member, as moved from the standby position in Fig. 19 and inserted into the cassette;
Fig. 21 is an explanatory view illustrating the inserter member standing moved from the inserting position and exited from the cassette;
Fig. 22 is an explanatory view illustrating the course of winding the photographic film around the spool;
Fig. 23 is a perspective view illustrating still another preferred spool;
Figs. 24 and 25 are explanatory views illustrating each retaining claw in the course of deformation;
Figs. 26 and 27 are explanatory view illustrating variant spools relevant to the spool in Fig. 23;
Fig. 28 is an explanatory view illustrating another preferred novel apparatus for loading photographic film;
Fig. 29 is a cross section illustrating a novel apparatus for removing photographic film;
Fig. 30 is a perspective view illustrating a separator jig for use in the apparatus in Fig. 29;
Figs. 31 to 33 are perspective views illustrating other preferred separator jigs;
Figs. 34 to 36 are explanatory views illustrating operation of the apparatus in Fig. 29;
Fig. 37 is a front elevation illustrating a spool in the course of separation of the trailer;
Fig. 38 is a cross section illustrating the spool in the course of separation of the trailer;
Fig. 39 is an exploded perspective view illustrating another cassette in which a slot for receiving a trailer in the spool is off-center;
Fig. 40 is a cross section illustrating the spool in Fig. 39;
Fig. 41 is an explanatory view illustrating a construction for retaining the trailer on the spool in the cassette in Fig. 39;
Fig. 42 is an explanatory view illustrating the trailer in the course of retention on the spool in the cassette in Fig. 39;
Fig. 43 is an explanatory view illustrating a trailer in the course of separation from the spool in the cassette in Fig. 39; and
Fig. 44 is a cross section illustrating another preferred cassette in which a core of a spool has a greater diameter.

### DETAILED DESCRIPTION OF THE PREFERRED EMBODIMENTS OF THE PRESENT INVENTION

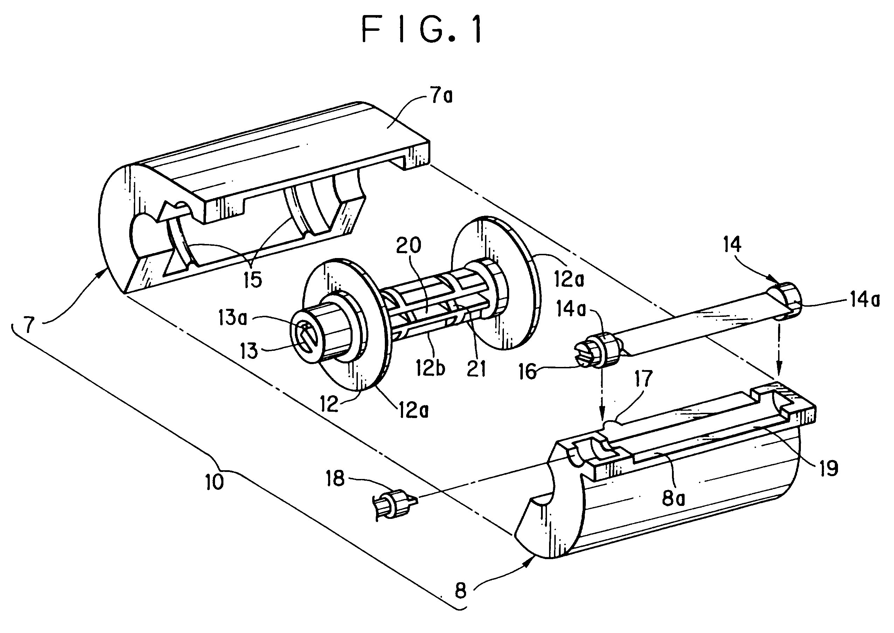

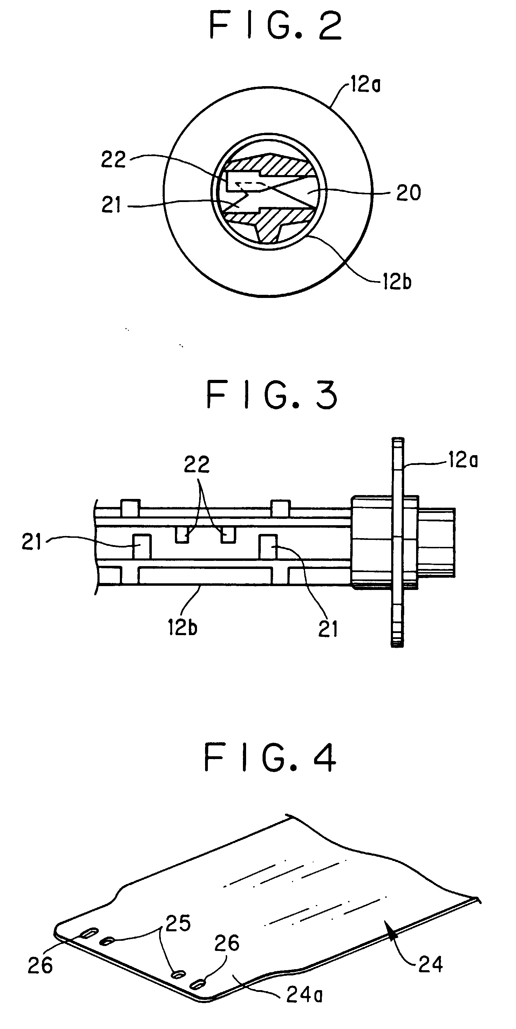

In Figs. 1 to 3 illustrating a photographic film cassette, having a spool 12 and a cassette shell 10 constituted of a pair of shell halves 7 and 8 molded from resin. Pairs of ridges 15 are formed on the inside of the shell halves 7 and 8. When photographic film 24 (see Fig. 4) is wound around the spool 12 and contained within a spool chamber between the shell halves 7 and 8, the ridges 15 are in contact with the outermost turn of the photographic film 24 so as to prevent the roll of the photographic film 24 from loosening. When the spool 12 is rotated in the direction to unwind the film 24 namely clockwise in Fig. 1, the roll of the photographic film is rotated clockwise together. Reference numeral 17 designates a separator claw. During rotation of the roll of the photographic film 24, a leading end of the photographic film abuts on the separator claw 17, which separates the leading end from the roll of the film.

Port walls 7a and 8a are formed on the shell halves 7 and 8. With the shell halves 7 and 8 joined together, the port walls 7a and 8a defines a photographic film passage port 19. A shutter plate 14 is supported by the port walls 7a and 8a. Both ends of the shutter 14 are provided with rotary shaft portions 14a to be borne between the port walls 7a and 8a, so that the shutter 14 is rotatable on an axis parallel to the spool 12. An end of one of the shaft portions 14a has a key 16, which appears externally through a face of the cassette shell 10. When an opener member 18 is fitted on the key 16 and rotates the key 16, the shutter 14 is rotated in the range between positions of blocking and opening the passage port 16.

On the spool 12 are formed a pair of flanges 12a. The photographic film is wound on a core 12b of the spool 12 between the flanges 12a. Both ends of the spool 12 appear externally through faces of the cassette shell 10, and are provided with keys 13. As known per se, the keys 13 are used for engagement with a drive member for rotating the spool 12. In one of the keys 13 is formed a notch 13a.

A slot 20 is formed in the core 12b. Inside the slot 20 are arranged two retaining claws 21 and two slip-preventive ridges 22. The ridges 22 are formed in the direction opposite to, and at the interval narrower than, the retaining claws 21. The right side of the slot 20 is adapted to receive insertion of a trailer 24a of the photographic film 24 as illustrated in Fig. 4.

The trailer 24a of the photographic film 24 is provided with two retaining holes 25, which are engaged with the retaining claws 21. The ridges 22 press the trailer 24a in the direction opposite to projecting of the retaining claws 21, so that the holes 25 are prevented from disengagement from the retaining claws 21, even if a force for pulling the photographic film 24 from the slot 20 should be applied to the trailer 24a. The trailer 24a is further provided with two pick-up holes 26 at the interval wider than the retaining holes 25. The pick-up holes 26 are used in operation of inserting the trailer 24a into the slot 20.

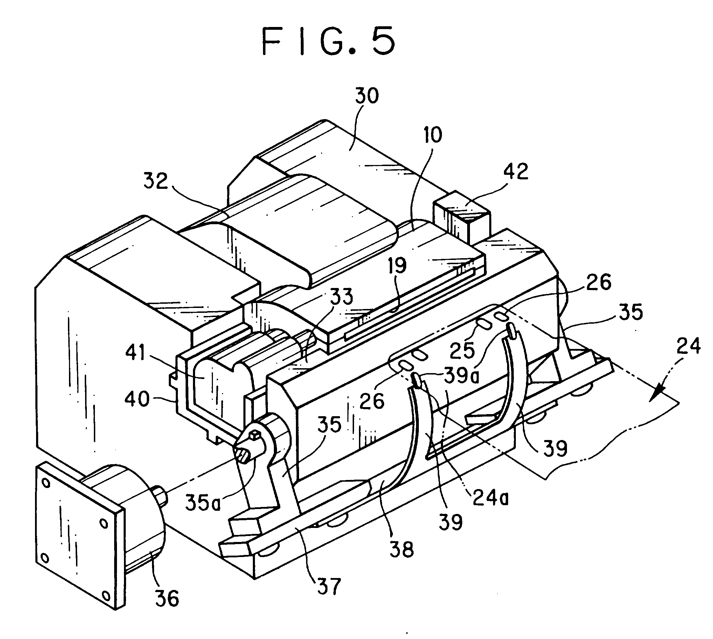

Figs. 5 to 7 illustrate a novel apparatus for inserting photographic film into the cassette. The apparatus is adapted to fixing the photographic film 24 on to the spool 12 and winding it thereabout, after assembling the spool 12 and the shutter 14 into the cassette shell 10 consisting of the shell halves 7 and 8. A base 30 is provided with a holder 31 shaped in correspondence with the outline of the cassette shell 10 for receiving and supporting the cassette shell 10. On the base 30 is journaled a lever 32, which is driven by a hydraulic cylinder device (not shown) through a linkage mechanism (not shown). When the cassette shell 10 is supplied into the holder 31, the lever 32 presses and holds the cassette shell 10 to be immovable.

With the cassette shell 10 pressed by the lever 32, the cassette shell 10 is fixedly oriented by positioning of the port wall 8a on a positioning edge 33, so as to direct the passage port 19 as predetermined. Both lateral faces of the base 30 are provided with a pair of arms 35 journaled thereon with each shaft 35a. The arms 35 are driven by a stepping motor 36. Each arm 35 is connected with a connecting plate 37, which is used for fixing a clawed inserter jig 39 on the arms 35. The inserter jig 39 is arcuate, is formed of flexible thin metal, and is provided with two projections tipped with pick-up claws 39a.

A slide frame 40 is arranged on one lateral face of the base 30 to be slidable toward, and apart from, an end face of the cassette shell 10, and is adapted to support a drive unit 41. The drive unit 41 drives the spool 12 and the shutter 14 to rotate, and is constituted of a fork 41a for engagement with the key 13 of the spool 12, a motor for driving the fork, an opener jig 18 for engagement with the key 16, and a motor for driving the opener 18. The slide frame 40 is in the retracted position before the cassette shell 10 is set in the holder 31, and is moved to the drive position after setting the cassette shell 10 in the predetermined orientation. The fork 41a for spool 12 and the opener 18 for the shutter 14 are respectively engaged with the keys 13 and 16 both appearing through the face of the cassette shell 10.

The other face of the base 30 is associated with a photo sensor 42, which detects the position of the notch 13a in the spool 12, so as to check the rotational position of the spool 12 with reference to the predetermined orientation for positioning the slot 20. Note that, though it is not shown, the spool end facing on the photo sensor 42 is provided with the key 13 and the notch 13a.

A feeder 45 of the photographic film 24 is arranged to face to the base 30. The feeder 45 is connected to a device for supplying the photographic film 24, and, each time one strip of photographic film is cut off and contained into the cassette shell, holds next trailer 24a in position for standby. When the trailer 24a is protruded from the feeder 45 on standby, the holes 26 are positioned as predetermined relative to the pick-up claws 39a.

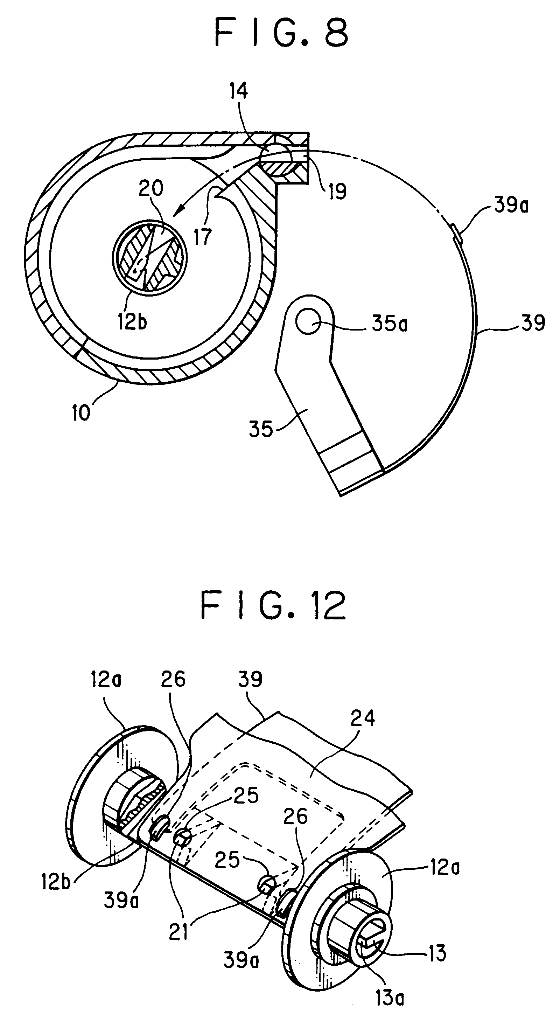

Fig. 8 illustrates relative positions of the cassette shell 10 and the arm 35 while the cassette shell is positioned by the holder 31 and the edge 33. The shaft 35a is substantially equally distant from the axis of the core 12a, the passage port 19, and the claw 39a. When the arm 35 is rotated counterclockwise from the standby position of Fig. 8, the claw 39a is passed through the passage port 19 and brought into the slot 20 within the core 12a. Note that the notch 13a is used for setting the rotational orientation of the spool 12 appropriately for receiving the trailer 24a, as illustrated in Fig. 8.

The operation of the inserting the photographic film 24 into the cassette shell 10 is described now. The cassette shell 10, as shown in Fig. 1, is assembled with the new spool 12 in an illuminated room, namely not in darkroom. The empty cassette therefore can be assembled reliably and easily, together with the shutter 14 and other separate parts, such as an indicator member for unexposed and exposed states, and a regulating member for rotation of the spool. The cassette shells 7 and 8 are welded together firmly by ultrasonic welding, and the empty cassette is brought to the following process.

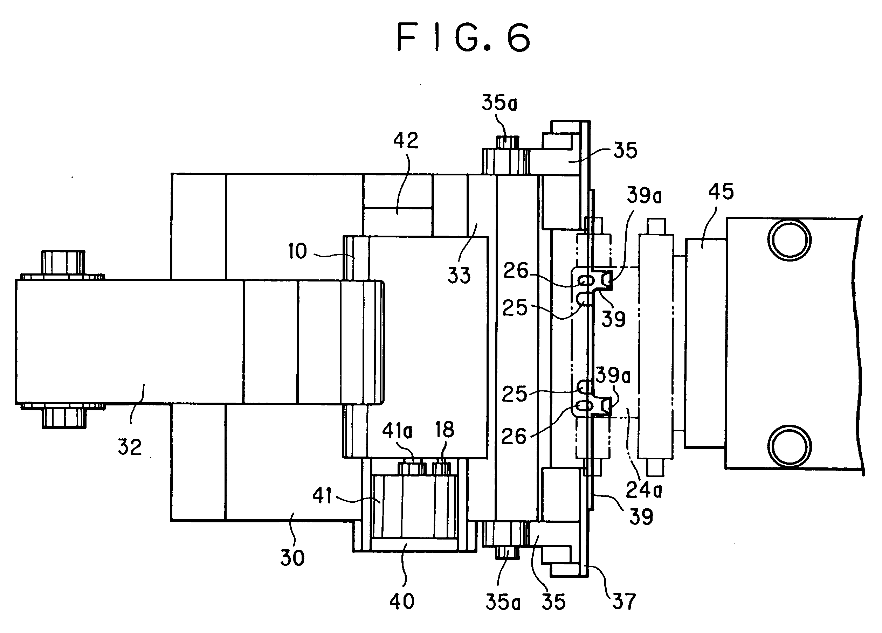

The empty cassette into which the spool 12 and the cassette shell 10 are assembled is brought into darkroom, and set into the photographic film loading apparatus. To set the empty cassette, the lever 32 is in the open position. The slide frame 40 is retracted. With the cassette shell 10 set in the holder 31, the lever 32 is swung to the pressing position so as to hold the cassette shell 10 on the holder 31 and the edge 33 in the predetermined orientation. The slide frame 40 is next moved until the drive position of Fig. 6. The fork 41a is engaged with the key 13. The opener 18 is engaged with the key 16.

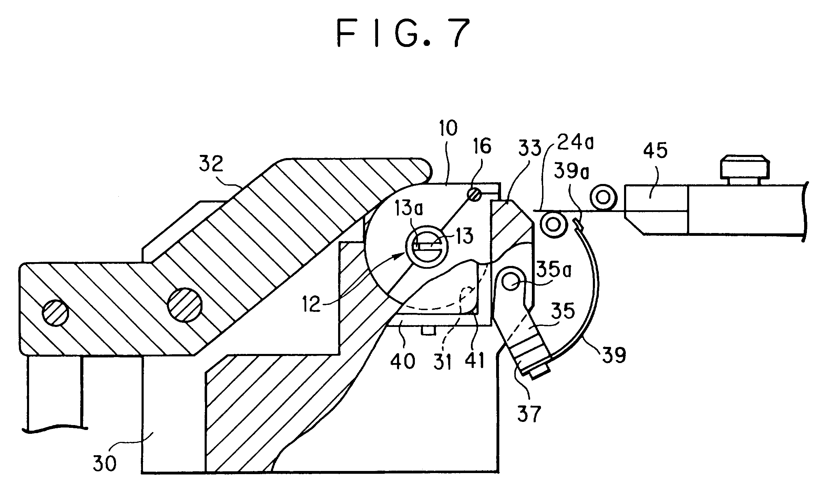

When the fork 41a and the opener 18 are firmly engaged with the respective keys 13 and 16, the drive unit 41 is actuated to drive the spool 12 in the winding direction, namely counterclockwise in Fig. 7. The spool 12 is thus rotated. The photo sensor 42 monitors the position of the notch 13a at the key 13 and, when the notch 13a has come to the predetermined position, sends a stop signal to the drive unit 41. The spool 12 is so stopped as to direct the entrance of the slot 20 in the core 12a to the passage port 19. Note that it is possible to regulate the spool 12 in the same rotational orientation beforehand during the transportation of the empty cassette into the holder 31. This can cause omission of the photo sensor 42 from the base 30.

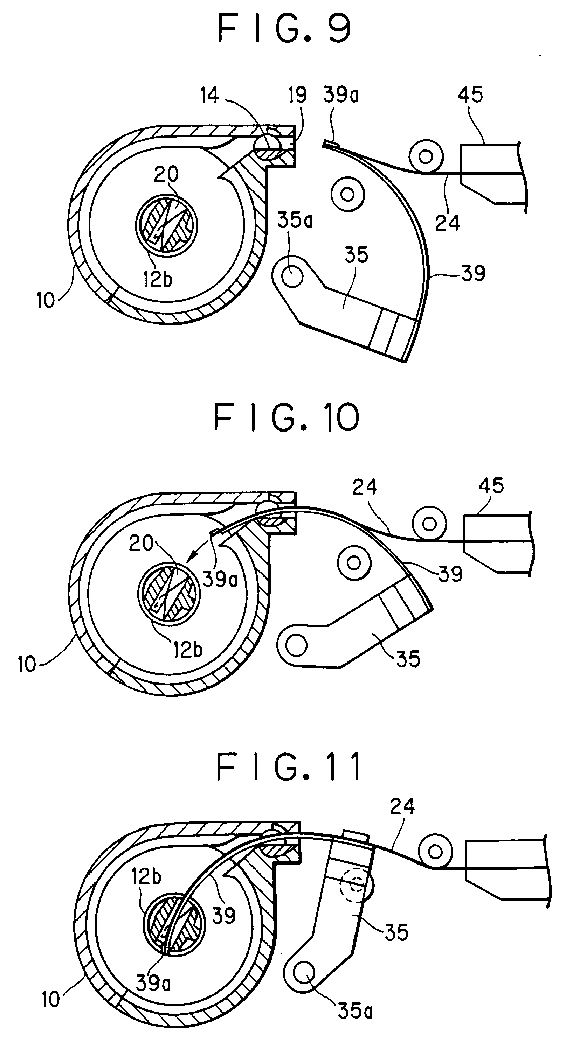

The opener 18 is driven by the drive unit 41 so as to rotate the shutter 14 to open the passage port 19. The stepping motor 36 is then energized to drive the arm 35 to make rotation of a predetermined angle. The inserter jig 39 rotates together with the arm 35, to engage the pick-up claws 39a with the holes 26 in the trailer 24a of the photographic film 24, as illustrated in Fig. 9. Further rotation of the arm 35 causes the pick-up claws 39a to pick up the trailer 24a, and pulls the photographic film 24 from the feeder 45.

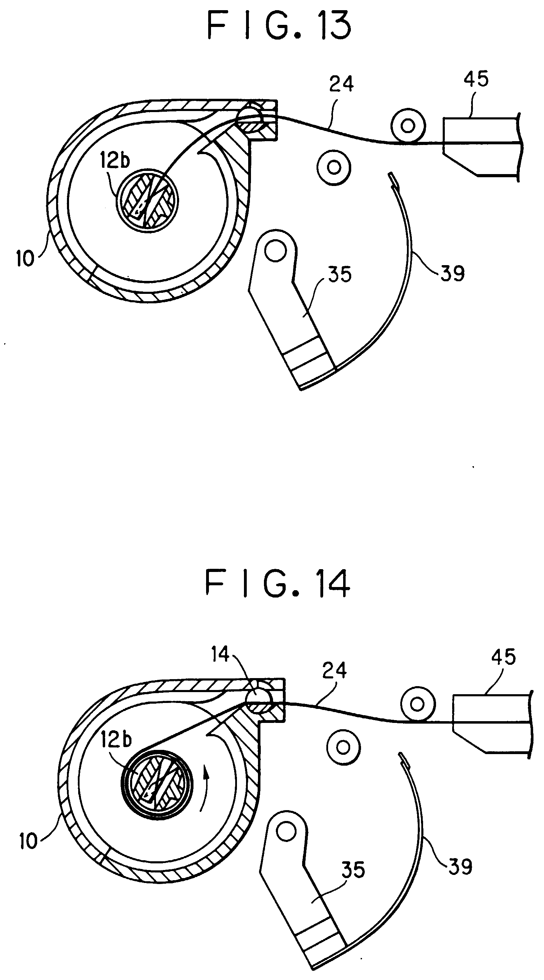

Rotation of the arm 35 causes the pick-up claws 39a to come through the passage port 19 with the trailer 24a picked up, and into the cassette shell 10. The arm 35 having come in the positions of Fig. 10 and then of Fig. 11, the pick-up claws 39a is inserted into the slot 20 formed in the core 12b. In the course of the insertion of the pick-up claws 39a into the slot 20, the trailer 24a as picked up by the pick-up claws 39a comes into the location between the retaining claws 21 and the ridges 22, so as to fit the retaining claws 21 into the holes 25, as illustrated in Fig. 12. The inserter jig 39 could be rubbed on the inside walls of the slot 20, but is so flexible that the pick-up claws 39a can be passed fully through the slot 20, without great resistance to insertion of the jig 39 into the slot 20. Note that the upper wall of the slot 20 is omitted from Fig. 12.

With the trailer 24a retained on the core 12b of the spool 12, the arm 35 rotates back to the standby position as illustrated in Fig. 13, while pulling the pick-up claws 39a out of the cassette shell 10. The retaining claws 21 are so shaped as to keep the photographic film 24 from moving in the direction toward the passage port 19. Once the holes 25 are retained on the retaining claws 21, never are the holes 25 disengaged from the slot 20 though the inserter jig 39 is pulled out of the slot 20. It is noted that, to remove the inserter jig 39 from the cassette, it is possible to rotate the spool 12 counterclockwise first, until the inserter jig 39 is pushed out of the slot 20. The arm 35, next, can be rotated clockwise to pull the inserter jig 39 out of the cassette shell 10. This alternative operation is possible due to the flexible thin characteristic of the inserter jig 39.

After the arm 35 is brought back to the standby position, the fork 41 of the drive unit 41 is driven to rotate the spool 12 in the counterclockwise direction as illustrated in Fig. 14. The photographic film 24 is wound up around the core 12b of the spool 12. The photographic film 24 is further drawn out of the feeder 45 by tension due to rotation of the spool 12, while being wound into the cassette shell 10. When a predetermined length of the photographic film 24 is passed through the feeder 45, the spool 12 is stopped from rotating. A cutter incorporated in the supply device of the photographic film is actuated to cut the photographic film 24. A leader-forming end of the photographic film 24 in the course of being wound is cut out by the cutter into the shape of the leader, at the same time as a trailer-forming end of next strip of photographic film is cut out by the cutter into the shape of the trailer, in which the holes 25 and 26 are further punched.

The strip of photographic film 24 being cut off, the spool 12 is driven to wind up the photographic film 24 into the cassette shell 10. Upon winding the leader of the photographic film 24 into the cassette shell 10, the spool 12 is stopped. The opener 18 is rotated clockwise, to move the shutter 14 to the blocking position to close the passage port 19. Then the inside of the cassette shell 10 is shielded completely from ambient light. The lever 32 is retracted to the releasing position. The cassette shell 10 with the photographic film 24 contained is removed from the holder 31, for which another empty cassette is supplied. The operation of the loading a cassette with photographic film is repeated similarly.

Accordingly photographic film cassettes can be manufactured with high efficiency despite a somewhat complicated structure of the empty cassette, because of the operation in the steps of: assembling the empty cassette in an illuminated room; retaining the trailer 24a on the spool 12 in the darkroom; and winding the photographic film 24 into the cassette in the darkroom.

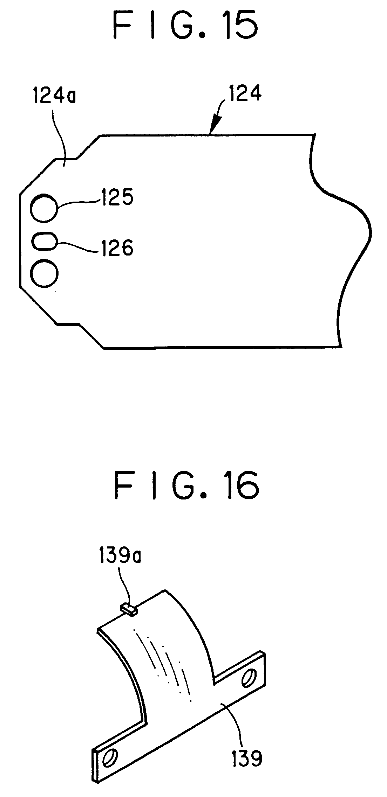

Note that a novel inserter jig can have not only the two claws 39a, but one or three or more claws, for picking up the trailer 24a. Figs. 15 and 16 illustrate photographic film 124 having a trailer 124a, in which a single pick-up hole 126 is formed, with two retaining holes 125. For use with this, an inserter jig 139 is provided with a single pick-up claw 139a. If another number of claws are formed on an inserter jig, pick-up claws of the equal number can be formed in a trailer of photographic film.

A trailer of photographic film can also be provided with a long single pick-up hole for being picked up by a plurality of pick-up claws formed on a spool. Such pick-up claws can be effective if they are so shaped as to move together with the trailer toward the spool without disengagement with the trailer, and as to be disengaged from the trailer to move alone toward the passage port in response to drawing back of the inserter jig or rotating of the spool in the winding direction.

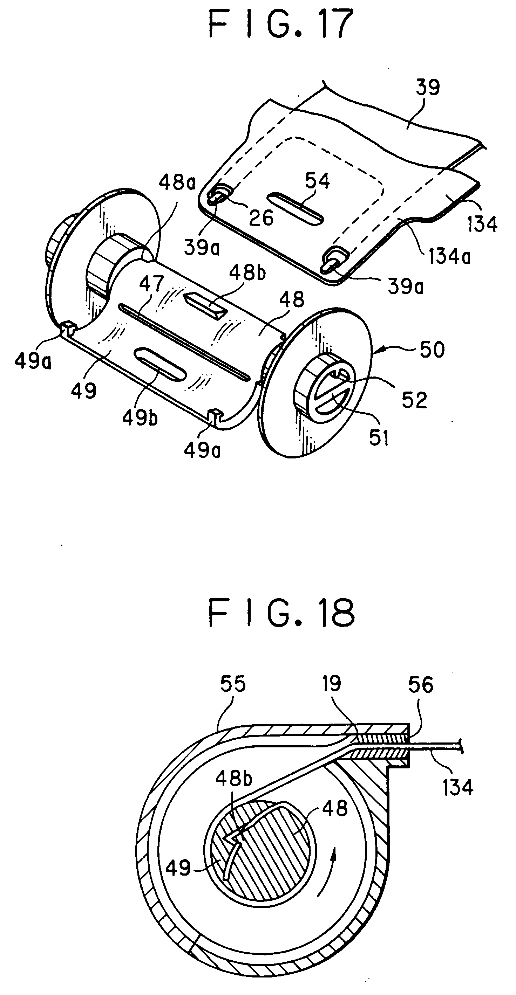

Fig. 17 illustrates another preferred embodiment in which the spool is differently constructed. Elements similar to those in the above embodiment are designated with identical reference numerals. A spool body 48 is provided with a clamper 49 via a foldably connecting hinge portion 47 of a small thickness, formed integrally. The spool body 48 is provided with a pair of notches 48a, with which hooks 49a on the clamper 49 are engaged. A long hooking claw 48b is formed integrally with the spool body 48. The inner face of the clamper 49 is provided with an hooking hole 49b, in which the hooking claw 48b is fitted when the clamper 49 is fitted on the spool body 48. The end of a spool 50 is provided with a key 51 and a projection 52, which corresponds to the former notch 13a and is adapted to detection through the photo sensor so as to check the rotational orientation of the spool 50.

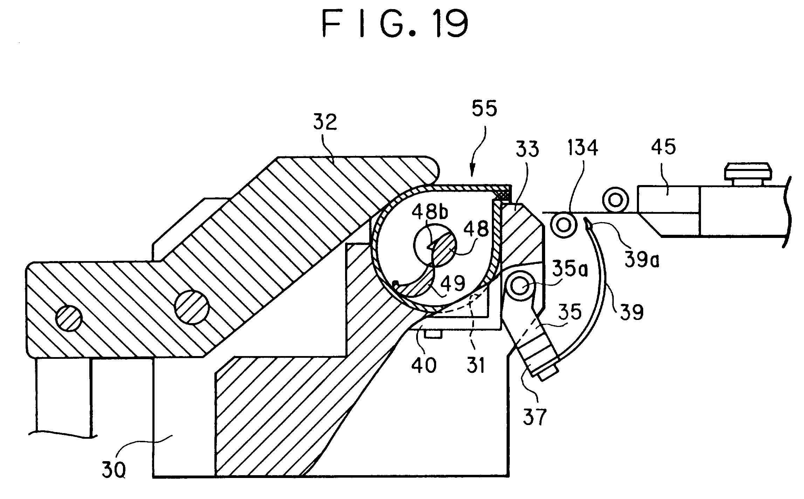

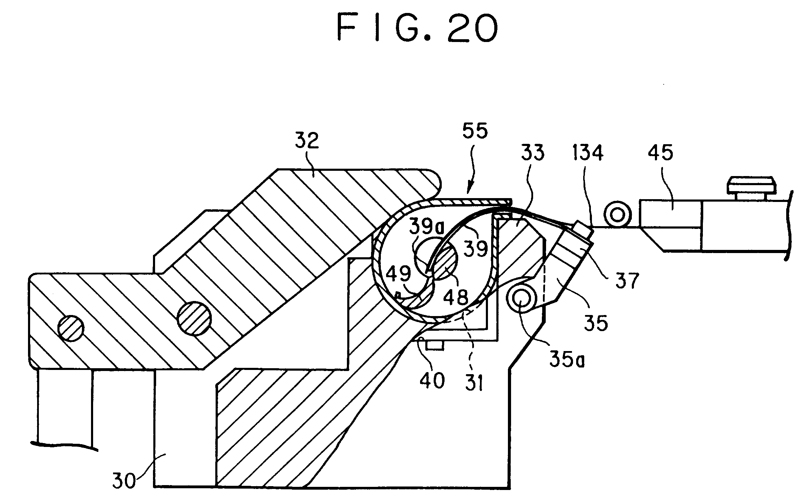

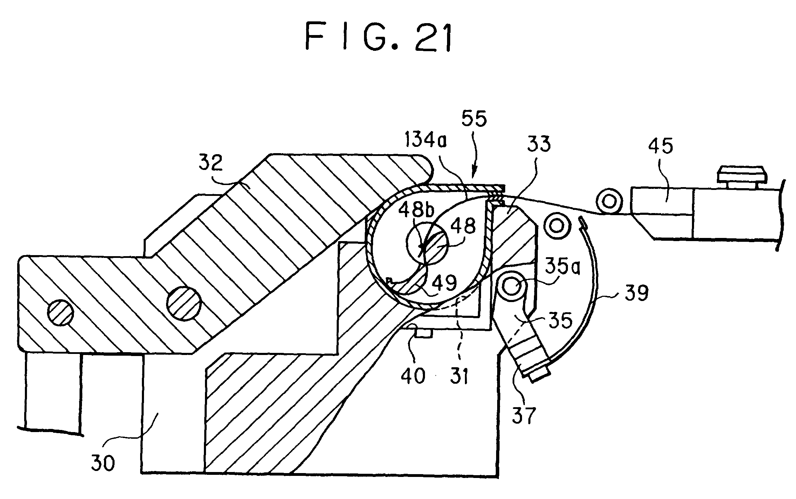

In correspondence with the spool 50, a trailer 134a of photographic film 134 is provided with the two holes 26 and a hooking hole 54. An empty cassette 55 for containing the photographic film 134 is set while the inserter jig 39 is in the standby position, as illustrated in Fig. 19. The loading apparatus is actuated. The trailer 134a is picked up by engagement of the pick-up holes 26 with the claws 39a. The inserter jig 39, as illustrated in Fig. 20, comes into the empty cassette 55, and reaches the spool body 48, until the hooking hole 54 is engaged with the claw 48b. Then the inserter jig 39 is pulled out of the cassette 55 as illustrated in Fig. 21, without disengagement between the hole 54 and the claw 48b. Note that, for reliable engagement of the hole 54 with the claw 48b, less than one counterclockwise rotation of the spool 50 is effective: while the claws 39a keep the trailer 134a close to the spool body 48, counterclockwise rotation of the claw 48b can easily cause the hole 54 to receive the claw 48b.

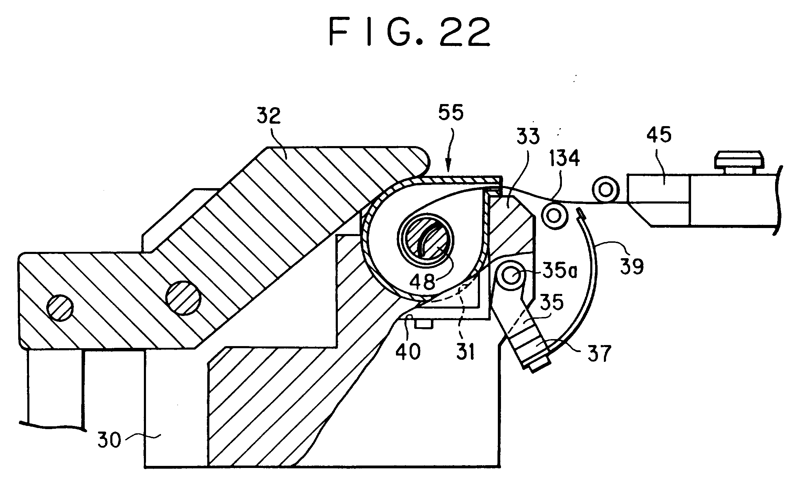

After the inserter jig 39 is drawn from out of the cassette shell 55, the spool 50 is rotated in the direction to wind the photographic film 134, the clamper 49 is pressed by the photographic film 134 against the spool body 48. As illustrated in Fig. 18, the clamper 49 is flexed with respect to the hinge portion 47. The claw 48b is fitted into the hole 49b. The clamper 49 is rotated together with the spool body 48. The photographic film 134 is wound on the spool 50 as illustrated in Fig. 22. Note that the cassette 55 in Fig. 18 lacks the shutter 14 but has plush or light-trapping fabric 56 well known in the art of photography.

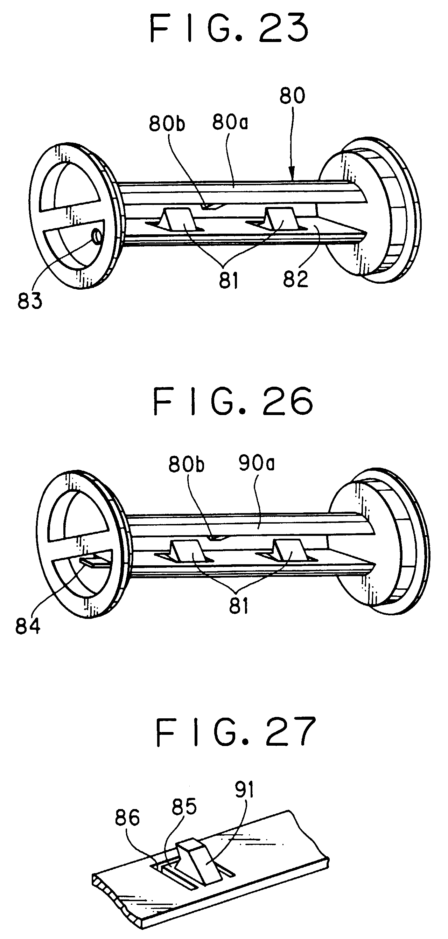

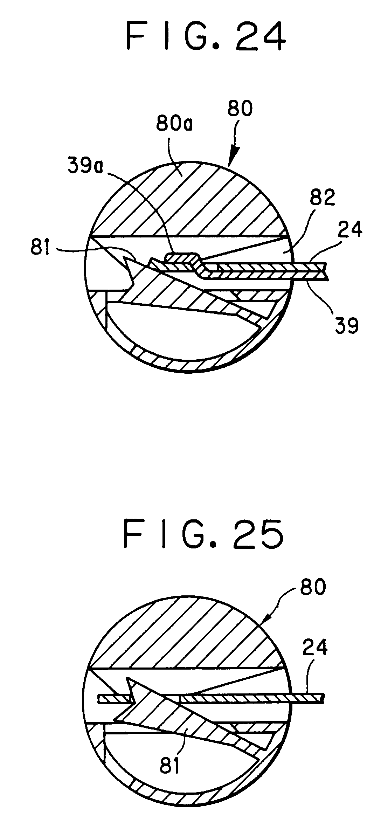

Fig. 23 illustrates another spool 80, which is formed from resin, and has retaining claws 81 movable up and down because of resilience. Referenced by 80b are slip-preventive ridges. The retaining claws 81 of the spool 80 are deformed as illustrated in Figs. 24 and 25 when the inserter jig 39 with the trailer 24a is inserted into a slot 82 in a core 80a. This deformability facilitates the insertion. The resilience of the retaining claws 81 recovers their original form when the retaining holes 25 in the trailer 24a receive the retaining claws 81. The deformability is also helpful to retention. The rotational orientation of the spool 80 is successively pursued by photoelectric detection of a hole 83. Alternatively, a core 90a of the spool can have a projection 84 as illustrated in Fig. 26. The projection 84 can be detected by mechanical contact with the photographic film loading apparatus. It is further possible as illustrated in Fig. 27 to form each retaining claw 91 on a tongue 85 defined with a channel-shaped slit 86, so as to construct the claw 91 movable with the tongue 85.

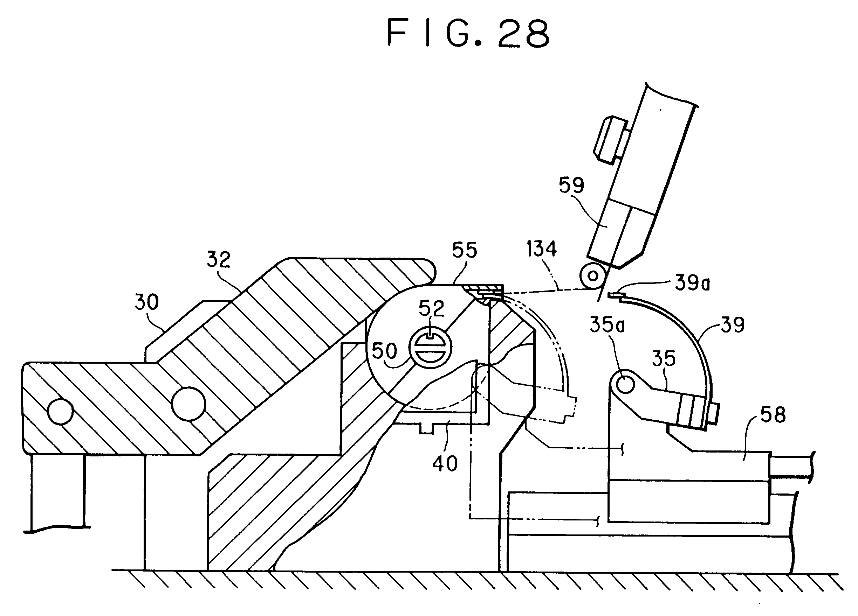

Fig. 28 illustrates another preferred embodiment. The arm 35 swingable with the inserter jig 39 is journaled on a slidable unit 58. The photographic film 134 is fed downward from a feeder 59. The photographic film loading apparatus in Fig. 28 is used e.g. for the cassette 55 in Fig. 18. With the cassette 55 positioned, the projection 52 is detected photoelectrically, so as to stop the spool 50 in the rotational orientation as predetermined.

The slidable unit 58 is next moved by a hydraulic cylinder from the standby position indicated by the solid line as shown to the operating position indicated by the phantom line. The trailer 134a of the photographic film is fed by the feeder 59 and stands by for the sliding path of the pick-up claw 39a. The slidable unit 58 slides to slide horizontally the claws 39a, so as to fit the claws 39a into the pick-up holes 26. The inserter jig 39 moves horizontally toward the base 30, while drawing the photographic film 134. The slidable unit 58 is stopped in the position of insertion. The shaft 35a of the arm 35 is shifted to the position from which the center of the spool 50 and the passage port 19 are equally distant, namely to the position of the shaft 35a according to Fig. 8.

Operation follows in the manner similar to the former embodiment. With reference to the shaft 35a as rotational center, the arm 35 is swung at a predetermined angle, and swung back until the initial inserting position. The trailer 134a is mounted on the spool body 48 of the spool 50 by hooking the claw 48b on the hole 54. Then the inserter jig 39 is drawn out of the cassette 55. The slidable unit 58 is retracted to the standby position. The spool 50 is driven to rotate in the winding direction of the photographic film 134. The photographic film 134 is wound up into the cassette 55, while drawn out of the feeder 59.

This photographic film loading apparatus incorporating the slidable unit 58 is naturally applicable not only to the cassette 55 in Figs. 17 and 18 but also to the cassette 10 in Figs. 1 to 4. Note that, though the present loading apparatus differs from the former in movement of the inserter jig 39, the former in arcuate fashion and the latter in straight and then arcuate courses, yet the inserter jig 39 can be moved along other paths. For example, the inserter jig 39 can be moved, first in straight fashion to the passage port 19, secondly in arcuate fashion from the passage port 19 to the slot 20, and thirdly in straight fashion within the slot 20. Such a preferable path makes it possible to lessen damages on the photographic film 24 and the shutter 14 while retaining trailer 24a of the photographic film 24 on the spool 12.

Accordingly, the use of the novel loading apparatus can completely automate the processes of loading the cassette with the photographic film. The photographic film cassette can be produced with great efficiency, because the empty cassette with the spool can be manufactured in an illuminated room.

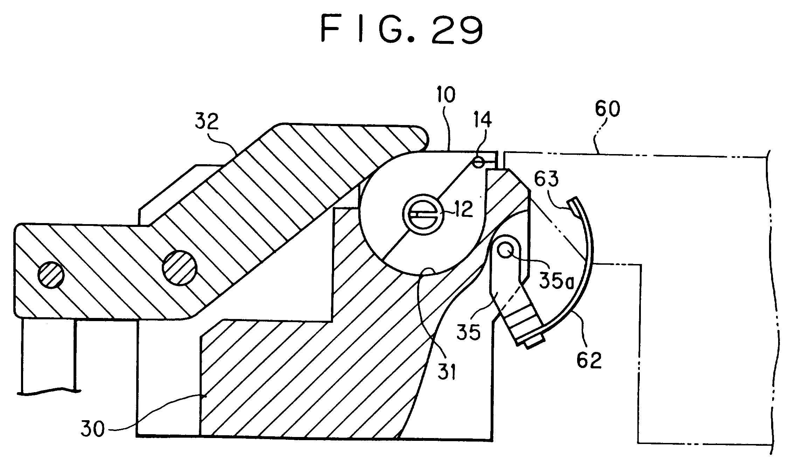

Fig. 29 illustrates an apparatus for removing exposed photographic film 144. This apparatus is applied in a photo laboratory, and usable both in the darkroom and an illuminated room, with a coverage for shielding the inside from ambient light. Fundamental construction of the removing apparatus is similar to the loading apparatus in Fig. 7. Elements the same as those of the former apparatus is designated with identical reference numerals. In the removing apparatus is arranged a photographic film drawing device 60, which is connected to a developing apparatus. The drawing device 60 draws the exposed photographic film 144 exited from the cassette shell 10, so as to convey the photographic film 144 automatically to the developing apparatus.

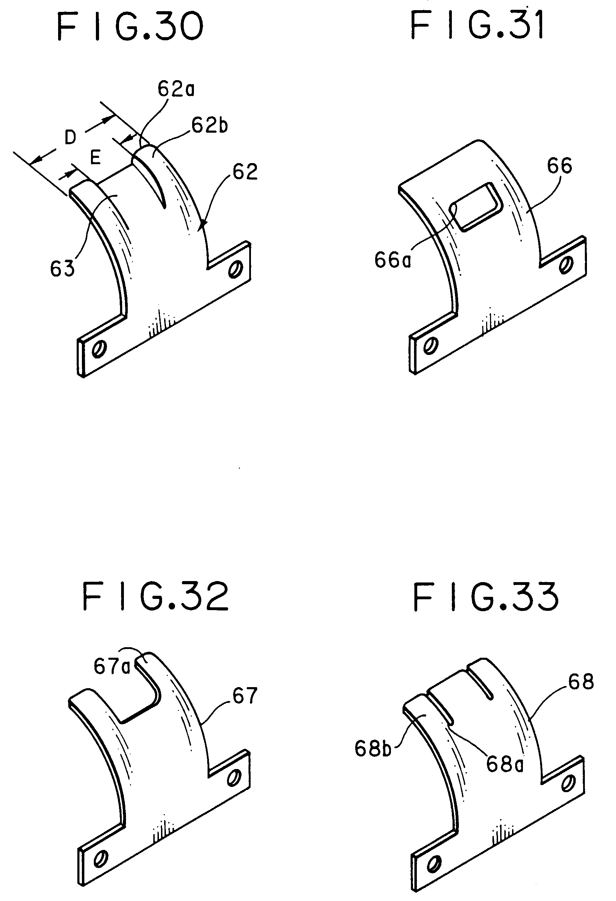

The two arms 35 are provided with a separator jig 62 attached thereto. The separator jig 62 is arcuate, is formed of flexible thin metal, and is provided with a central lowered portion 63 on a front edge 62a, as illustrated in Fig. 30. The front edge 62a is so shaped as corresponds to the spool 12 illustrated in Figs. 2 and 3. The general width D of the separator jig 62 is greater than the interval between the two retaining claws 21. The width E of the lowered portion 63 is greater than the interval between the preventive ridges 22.

With all the photographic film wound and contained within the cassette shell 10, the cassette shell 10 set on the holder 31. Then the opener 18 rotates the shutter 14 to open the passage port 19. The fork 41a drives the spool 12 in the direction of advancement of the photographic film 144. The roll of the exposed photographic film 144 is rotated together with the spool 12. The leading edge of the photographic film 144 abuts on, and is separated by, the separator claw 17, and is directed into the passage port 19. With the spool 12 driven, a leader of the photographic film 144 is exited from the cassette shell 10, and is guided into the drawing device 60.

The photographic film 144 is advanced into the drawing device 60 at a predetermined length. A drawing mechanism in the drawing device 60 is then actuated to draw the photographic film 144 from the cassette shell 10. The drive unit 41 no further drives the fork 41a. The photographic film 144 is advanced into the drawing device 60 by being drawn. Nearly all the exposed photographic film 144 is drawn out of the cassette shell 10. As a trailer 144a of the photographic film 144 stands retained on the core 12b of the spool 12, the photographic film 144 stops being drawn out. The drawing device 60 incorporates a tension meter, which checks the tension of the photographic film 144 and detects the state where nearly all the exposed photographic film is drawn out. Upon this detection, the drawing device 60 is moved slidingly to the right in Fig. 29 so as to be apart from the base 30.

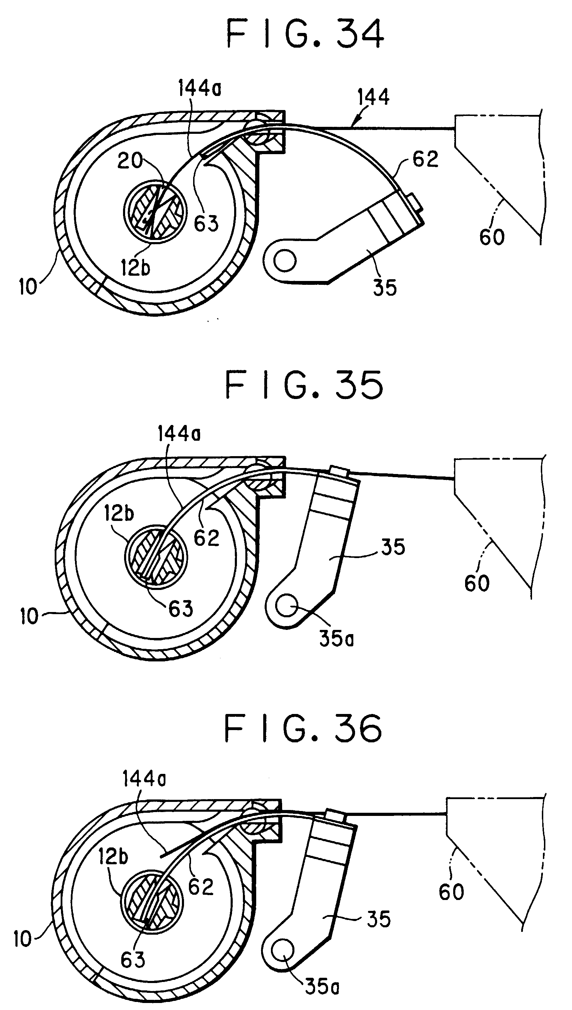

The arm 35 is rotated as illustrated in Fig. 34. The front edge 62a of the separator jig 62 is entered into the passage port 19 in the cassette shell 10, along the emulsion surface of the photographic film 144, arranged on the bottom side as viewed in the drawings. While tension is applied to the photographic film 144, the slot 20 in the spool 12 is directed to the passage port 19. The front edge 62a of the separator jig 62 enters the slot 20 deeply, as illustrated in Fig. 35. Note that photoelectric detection of the notch 13a on the photo sensor 42 may be use in auxiliary fashion, for the purpose of checking the rotational orientation of the slot as to whether directed to the passage port 19.

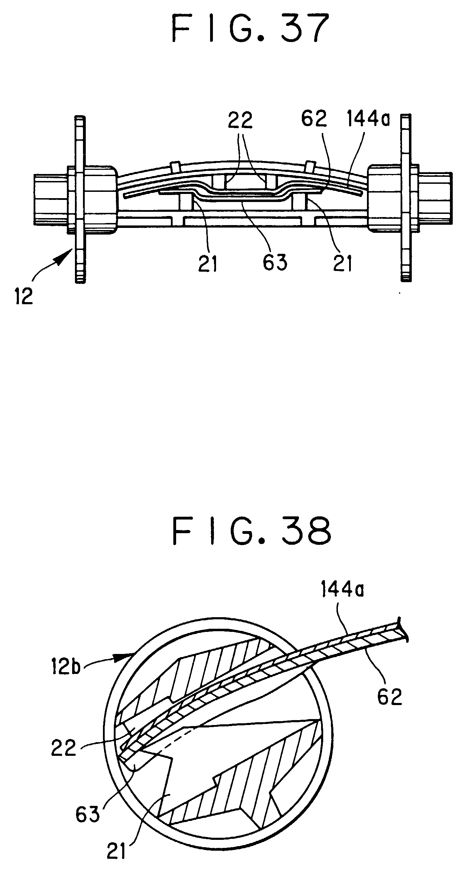

Figs. 37 and 38 illustrate the front end of the separator jig 62 as thrust deeply into the slot 20. The preventive ridges 22 on the upside of the slot 20 abut on the lowered portion 63 of the separator jig 62. Lateral raised portions 62b press the upside of the slot 20 upward, to deform the core 12b curvedly, as illustrated in Fig. 37. The raised portions 62b, as thrust, ride the retaining claws 21, are inserted between the photographic film 144 and the retaining claws 21, and disengage the retaining holes 25 from the claws 21, until the trailer 144a is released from retention on the spool 12. Note that to enter the separator jig 62 into the cassette shell 10 is also reliable in the course where the photographic film 144 stands unwound so that only one convolution or less remains wound on the spool 12. This is because, though the separator jig 62 is not directed to the slot 20 initially, the emulsion surface of the photographic film 144 is in contact with the separator jig 62, and guides it to the entrance of the slot 20 while the one convolution or less is being unwound. The emulsion surface of the photographic film 144 could be scratched by the separator jig 62. However such scratches does not influence the image quality, because the separator jig 62 comes in contact only with the trailer 144a where no images are recorded.

The arm 35 is temporarily stopped from rotation. The drawing mechanism in the drawing device 60 is actuated to draw the photographic film 144. The trailer having been released from retention on the spool 12, the photographic film 144 as drawn is removed from the spool 12 as illustrated in Fig. 36, until the photographic film 144 is fully drawn into the drawing device 60. The arm 35 is rotated in reverse, and returned to the home position indicated by the solid line in Fig. 29. The drawing device 60 again comes close to the base 30, and stands by for processing of another cassette containing exposed photographic film.

The use of the novel photographic film removing apparatus thus makes it possible with ease to remove the trailer from the spool 12, without any disassembly of the cassette shell 10. If the inserting apparatus in Fig. 5 to 7 is used additionally to the removing apparatus, it is conceivable with advantages to reuse the used cassette shell as emptied by the removing apparatus. Novel separator jigs can be alternatively formed in the shapes as illustrated in Figs. 31, 32 and 33. In Fig. 31, a separator jig 66 has a flat front edge. When thrust into the slot 20, the widthwise central portion is bent and lowered by the preventive ridges 22 for smooth entry into the slot 20, while assisted by an opening 66. The opening 66 is also helpful, when a passage port is constructed with a plush or light-trapping fabric, to incline the pile threads of the plush toward the outside of the cassette.

In Fig. 32, a separator jig 67 is provided with a central recess defining a pair of lateral projections 67a, which are adapted to contact with the claws 21 and disengagement of the holes 25. In Fig. 33, a separator jig 68 is provided with two grooves 68a beside which a pair of flaps 68b are defined. The central portion is easily deformable in contact with the preventive ridges 22. All the separator jigs 66 to 68 can be also attached to the arms 35 in Fig. 29. With any of the variant separator jigs, the path for movement can be determined appropriately in view of unfailing entry of the jigs into the slot formed in the spool. The cassette to be processed with the novel removing apparatus can be such as illustrated in Fig. 23 to 27 with more preference, because the retaining claws can be deformed with greater ease.

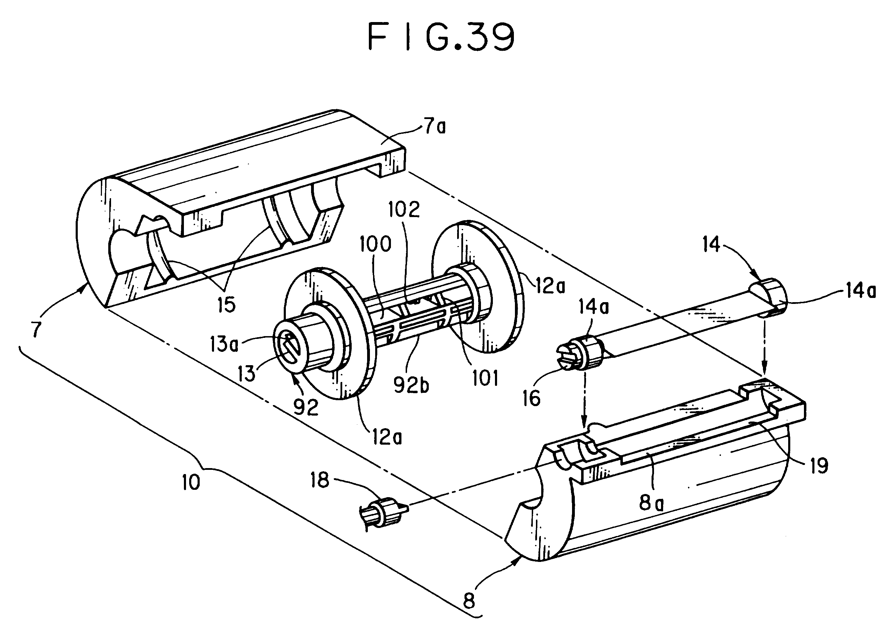

There are problems in the above embodiments in that operation of entering the inserter jig or separator jig into the slot in the spool requires excessive force, which would irrecoverably deform the jigs. The radius of curvature of the inserter jig or separator jig should be determined so small that a passage of the jigs through the passage port would cause the jig to rub the inside of the passage port to scratch or wear it. With the cassette shell having the plush, the threads would be so erected as to hinder the photographic film from passing through the passage port. Figs. 39 to 42 illustrate an embodiment in which a radius of curvature of an inserter jig is enlarged, in order to reduce resistance in entry of the jig into the slot and to keep spatial allowance for passage through the passage port. Elements the same as those of the former apparatus is designated with identical reference numerals.

The cassette shell 10 contains a spool 92, appropriate for winding photographic film 94 of a somewhat long strip, namely for recording somewhat many picture frames, e.g. as many as 36 to 40 exposures. The diameter across a core 92b of the spool 92 is in the range of 5 to 10 mm, namely so small as to correspond to the somewhat many convolutions of the photographic film 94 as wound.

A slot 100 is so formed in the core 92b that a center line of the slot 100, namely the line equally distant from two walls of the slot 100, is not passed through the rotational axis of the spool 92. Let A1 be an interval between the center line of the slot 100 and the axis of the spool 92. A1 is for example in the range of 0.3 to 4 mm. Let T be the thickness of a thinner wall 100a of the slot 92 which is thinner than the opposite wall and is provided with slip-preventive ridges 102. To facilitate the deformation of the thinner wall 100a, T is in the range of 0.3 to 1.5 mm, more preferably 0.8 to 1.2 mm.

It is also noted that intersection between retaining claws 101 and the preventive ridges 102 lies not on the rotational axis of the spool 92. A novel apparatus for loading photographic film into the cassette having the spool 92 is provided with an inserter jig 109, of which an arcuate shape has a somewhat great radius of curvature, for example in the range of 18 to 30 mm.

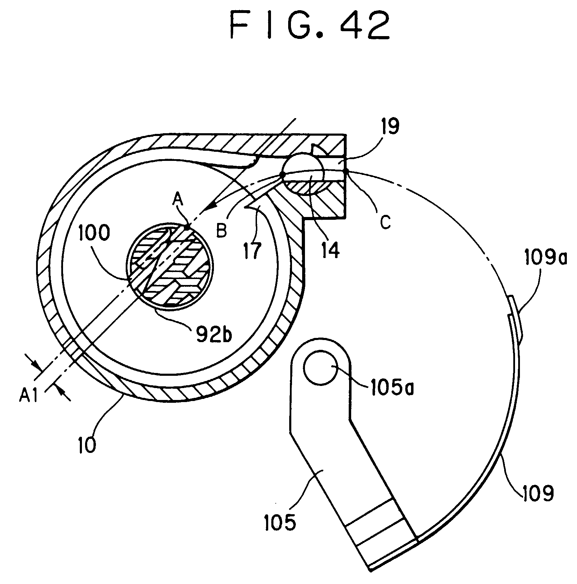

Fig. 42 illustrates a relationship between the cassette shell 10 and a jig arm 105 while the cassette shell 10 stands positioned by the holder 31 and the edge 33 in the predetermined orientation. Point A is the intersection of the center line of the slot 100 and the core 92b. Point B lies in the innermost position of the passage port 19 and equally distant from the port walls of the passage port 19. Point C lines in the outermost position of the passage port 19 and equally distant to the port walls. The arcuate shape of the inserter jig 109 and thus the path of each pick-up claw 109a lie on a circle on which Points A, B and C lie. The inserter jig 109 with the pick-up claws 109a passes substantially a course equally distant from the port walls of the passage port 19.

Because the thinner wall 100a of the slot 100 in the core 92b desirably is only as thick as 0.8 to 1.2 mm, the thinner wall 100a is so easily deformed that resistance to entry of the inserter jig 109 is in the range of only 300 to 700 gf. This is substantially low resistance as compared with the former spools, in which the slot passes the rotational axis, with a high resistance to entry of the inserter jig ranging from 800 to 1000 gf. The core 92b makes no influence deforming irrecoverably the pick-up claws 109a.

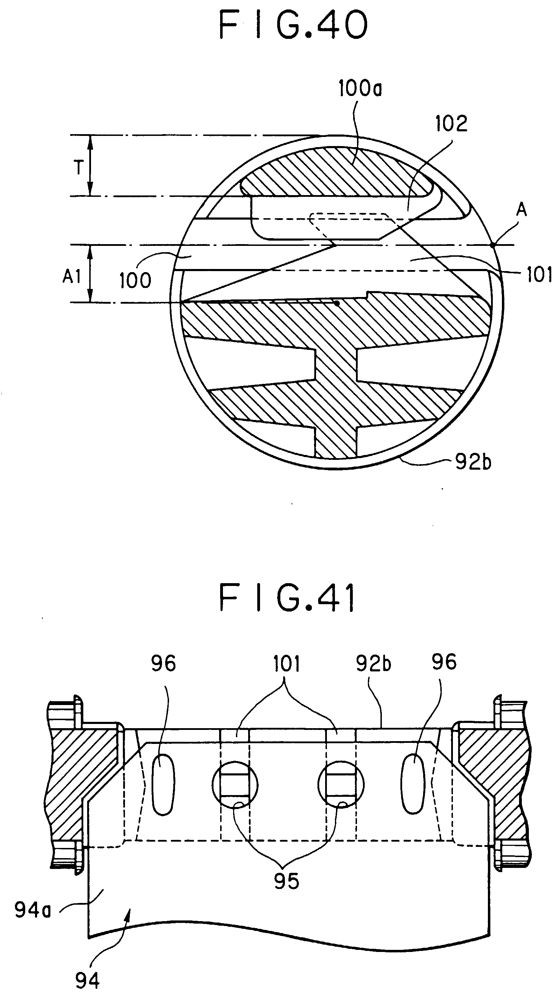

Note that, to load the cassette shell 10 with the photographic film 94, the spool 12 is stopped for standing by for receiving a trailer 94a into the slot 100 as illustrated in Fig. 42, namely in the orientation where Point A is in the arcuate path of the claws 109a. In rotating the arm 105, the claws 109a pick up pick-up holes 96 in the trailer 94a and pass Points B and C within the passage port 19 so as to enter the cassette shell 10. The thinner wall 100a with the preventive ridges 102 is omitted from Fig. 41, for convenience in showing the trailer 94a with the core 92b.

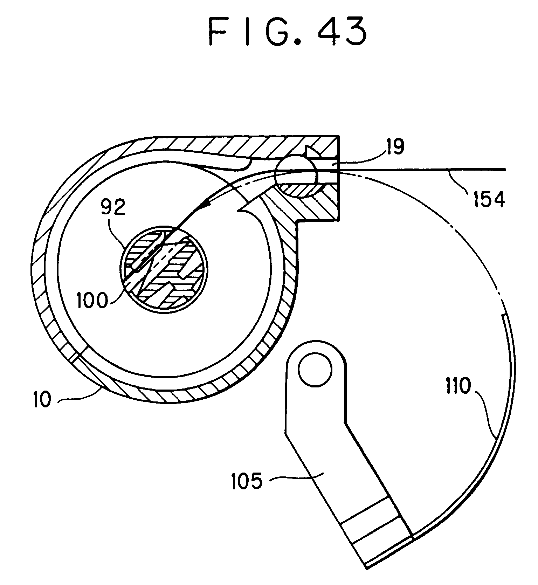

Fig. 43 explanatorily illustrates a photographic film removing apparatus appropriate for the cassette shell 10 containing the novel spool 92. Elements the same as those of the former apparatus is designated with identical reference numerals. A separator jig 110 is entered between the retaining claws 101 and exposed photographic film 154. The retaining holes 95 are disengaged from the retaining claws, so as to release the trailer 154 from retention on the slot 100.

Note that, when the present invention is applied to a cassette as disclosed in U.S.P. 4,834,306 in which a spool has a pair of flanges with circumferential lips, it is desirable to prevent the jigs from coming in contact with the flanges, by setting the width of the inserter jig 109 and the separator jig 110 smaller than the interval defined between the two lips on the flanges.

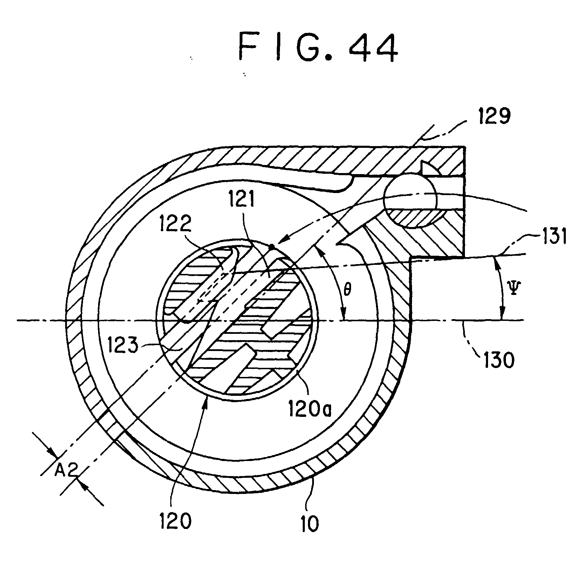

Fig. 44 illustrates a cassette containing another spool 92, appropriate for winding photographic film of a shorter strip, namely for recording fewer picture frames, e.g. as many as 10 to 28 exposures, unlike the former photographic film 94, 154 of recording somewhat many picture frames. The diameter across a core 120b of the spool 120 is in the range of 11 to 13 mm, greater than that of the former embodiment, namely so great as to correspond to the fewer convolutions of the photographic film as wound.

Let A2 be an interval between the center line of a slot 123 and the axis of the spool 120. It is desirable that A2 be equal to or below A1 as described with the above embodiment. Let θ be an angle between a horizontal line 130 and a line 129, namely an angle between the course of the passage port 19 and the direction of the slot 123 as oriented for receiving the trailer. It is desirable that θ be equal to or over a counterpart associated with the spool 92. Let Ψ be an angle between the horizontal line 130 and a line 131 along which retaining claws 121 are inclined for coming in gentle contact with the trailer as inserted. It is desirable that Ψ be substantially equal to a counterpart associated with the former spool 92. Referenced by 122 are slip-preventive ridges.

Therefore the present invention is applicable with advantages to loading the photographic film of a shorter strip into the cassette provided with the spool suitable for the fewer convolutions, in the manner the same as loading the photographic film of a longer strip into the cassette provided with the spool suitable for the more convolutions.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention as defined in the claims, they should be construed as included therein.

## Claims

1. An apparatus for loading photographic film (24,94,124,134) into a cassette, said cassette including a spool (12,50,80,92,120) provided with a retaining structure (21, 48b,81,91,101, 121) for retaining a trailer (24a,124a,134a) of said photographic film, and a cassette shell (10) provided with a spool chamber in which said spool is rotatably disposed and a photogaphic film passage port (19) for communicating said spool chamber to the outside; said photographic film loading apparatus comprising:
holding means (31) for holding said cassette shell in a predetermined orientation so as to position said passage port in a predetermined direction;
an inserter member (35;39,109,139) for inserting said trailer into said cassette shell, said inserter member being arranged to be moved between an inserting position, in which said inserter member has been passed through said passage port into said spool chamber, and a standby position, in which said inserter member has been drawn out from said spool chamber through said passage port; spool rotating means (41a) for rotating said spool in order to wind said photographic film around said spool, said inserter member comprising a pick-up end portion (39a,109a,139a) for picking up said trailer so as to bring said trailer into contact with said spool and mount said trailer on said spool when said inserter member moves to said inserting position; and feeder means (45,49) for feeding said photographic film (24,94,124,134) so as to set said trailer in a pick-up position in which said trailer is picked up by said pick-up end portion of said inserter member,
characterised in that said inserter member has an arcuate profile and is arranged to move rotationally about the centre of curvature (35a) of said arcuate profile, and said trailer is picked up in the course of movement of said inserter member from said standby position to said inserting position.

2. A photographic film loading apparatus as defined in claim 1, wherein said feeder means (59) is arranged to feed said trailer (134a) in a direction crossing the extension of said passage port (19).

3. A photographic film loading apparatus as defined in claim 2, further comprising sliding means (58) for sliding said inserter member (35,39) toward said cassette shell (10), and said trailer is picked up in the course of sliding said inserter member (35,39).

4. A photographic film loading apparatus as defined in claim 2, wherein said feeder means (45) is arranged to feed said trailer (24a,124a,134a) toward said passage port (19).

5. A photographic film loading apparatus as defined in claim 1, wherein said feeder means (59) feeds said trailer (24a,124a,134a) in a direction crossing the arcuate moving path of said inserter member (35;39,109,139).

6. A photographic film loading apparatus as defined in claim 1, wherein said pick-up end portion (39a,109a,139a) causes said retaining structure (21,101,121) to retain said trailer (24a, 94a, 124a) when said inserter member (39,109,139) moves.

7. A photographic film loading apparatus as defined in claim 6, wherein said pick-up end portion comprises at least one claw (39a,139a) for picking up at least one pick-up hole (26,96,126) formed in said trailer (24a,94a,124a).

8. An apparatus for removing exposed photographic film (144,154) from a cassette, said cassette including a spool (12,80,92,120) provided with a retaining structure (21,81,91,101,121) for retaining a trailer of said photographic film, and a cassette shell (10) provided with a spool chamber in which said spool is rotatably disposed and a photographic film passage port for communicating said spool chamber to the outside; said photographic film removing apparatus comprising holding means (31) for holding said cassette shell (10) in a predetermined orientation so as to position said passage port in a predetermined direction; drawing means (60) for drawing said photographic film until said photographic film stands unwound so that one convolution or less remains wound on said spool; a separator member (35;62,66,67,68,110) for separating said trailer from said spool, said separator member being arranged to be moved between an inserting position, in which said separator member has been passed through said passage port into said spool chamber and brought into contact with said trailer, and a standby position, in which said separator member has been drawn out from said spool chamber through said passage port, said separator member being moved to said inserting position after said photographic film stands unwound so that one convolution or less remains wound on said spool after drawing by said drawing means and releasing said trailer from retention on said retaining structure while leaving said spool in said cassette shell; spool rotating means (41a) for rotating said spool in order that at least a portion of a leader of said photographic film exits through said passage port and drive means for moving said separator member, wherein said separator member has an arcuate profile and is arranged to move rotationally about the centre of curvature of said arcuate profile, and said drive means moves said separator member from said standby position to said inserting position and then back to said standby position.

9. A photographic film removing apparatus as defined in claim 8, wherein said separator member is provided with a releasing end portion for being entered between a retaining claw (21,101,121) formed in a longitudinal slot of said spool and said trailer in order to release retention, and said releasing end portion spreads said slot (20,100,123) so as to release said trailer from said retention.

10. A photographic film removing apparatus as defined in claim 9, wherein said releasing end portion (62a) has a raised portion (62b) for disengaging a retaining hole (25) formed in said trailer from said retaining claw (21) by riding said retaining claw.

11. A photographic film removing apparatus as defined in claim 9, wherein said separator member (66) is provided with an opening (66a) rendering said releasing end portion flexible.

12. A photographic film removing apparatus as defined in claim 9, wherein said releasing end portion has a projection (67a) for disengaging a retaining hole (25) formed in said trailer from said retaining claw (21) by riding said retaining claw.

13. A photographic film removing apparatus as defined in claim 9, wherein said releasing end portion includes:
at least one groove (68a); and
a flap portion (68b) defined beside said groove for disengaging a retaining hole (25) formed in said trailer from said retaining claw (21) by riding said retaining claw.

14. A method of loading photographic film (24,94,124,134) into a cassette, said cassette including a spool (12,50,80,92,120) provided with a retaining structure (21,81,91,101,121) for retaining a trailer (24a,124a,134a) of said photographic film, and a cassette shell (10) provided with a spool chamber in which said spool is rotatably disposed and a photographic film passage port (19) for communicating said spool chamber to the outside; wherein a slot (20,82,100,123) is formed in said spool extending in the longitudinal direction of said spool for receiving said trailer, and said retaining structure is arranged inside said slot; said photographic film loading method comprising:
feeding said photographic film through feeder means (59), so as to set said trailer in a pick-up position; moving an inserter jig (35,39,109,139) rotationally about a centre (35a) of rotation, wherein the path of said inserter jig crosses the feeding path of said trailer fed by said feeder means, said trailer being picked up by said inserter jig in said pick-up position;
bringing said insert jig into said cassette, as passed through said passage port, so as to insert said trailer into said cassette shell;
retaining said trailer on said spool with said retaining structure;
drawing said inserter jig out of said cassette shell; and
rotating said spool in order to wind said photographic film around said spool, so as to wind said photographic film up into said cassette shell, characterised in that said inserter jig has an arcuate profile having as centre of curvature said centre of rotation (35a).

15. A method of removing exposed photographic film (144,154) from a cassette, said cassette including a spool (12,80,92,120) provided with a retaining structure (21,81,91,101,121) for retaining a trailer (24a,124a,134a) of said photographic film, and a cassette shell (10) provided with a spool chamber in which said spool is rotatably disposed and a photographic film passage port for communicating said spool chamber to the outside; wherein a slot (20,82,100,123) is formed in said spool extending in the longitudinal direction of said spool for receiving said trailer, and said retaining structure is arranged inside said slot; said photographic film removing method comprising:
rotating said spool in order that at least a portion of a leader of said photographic film exits through said passage port;
drawing said photographic film until said photographic film stands unwound so that one convolution or less remains wound on said spool;
bringing a separator jig (35;62,66,67,68,110) into said cassette shell to contact said trailer, as passed through said passage port;
releasing said trailer from retention on said retaining structure by use of said separator jig; and
drawing out said photographic film so as to separate said photographic film from said spool, wherein said separator jig has an arcuate profile and is arranged to more rotationally about the centre of curvature (35a) of said arcuate profile.

## Patentansprüche

1. Eine Vorrichtung zum Laden von Photofilm (24, 94, 124, 134) in eine Patrone, wobei die genannte Patrone eine Spule (12, 50, 80, 92, 120) einschließt, die mit einer Haltestruktur (21, 48b, 81, 91, 101, 121) zum Halten eines Auslaufs (24a, 124a, 134a) des genannten Photofilms versehen ist, und ein Patronengehäuse (10), das mit einer Spulenkammer, in der die genannte Spule drehbar angeordnet ist, und einer Photofilmdurchgangsöffnung (19) zur Verbindung der genannten Spulenkammer mit dem Äußeren versehen ist; wobei die genannte Photofilmladevorhchtung umfaßt: eine Halteeinrichtung (31) zum Halten des genannten Patronengehäuses in einer vorbestimmten Ausrichtung, so daß die genannte Durchgangsöffnung in einer vorbestimmten Richtung angeordnet wird;
ein Einführteil (35; 39, 109, 139) zum Einführen des genannten Auslaufs in das genannte Patronengehäuse, wobei das genannte Einführteil angeordnet ist, zwischen einer Einführstellung, in der das genannte Einführteil durch die genannte Durchgangsöffnung in die genannte Spulenkammer hindurchgegangen ist, und
eine Bereitschaftsstellung bewegt wird, in der das genannte Einführteil aus der genannten Spulenkammer durch die genannte Durchgangsöffnung hindurch herausgezogen worden ist; eine Spulendrehvorrichtung (41a) zum Drehen der genannten Spule, um den genannten Photofilm um die genannte Spule herumzuwickeln, wobei das genannte Einführteil einen Aufnahmeendabschnitt (39a, 109a, 139a) zum Aufnehmen des genannten Auslaufs umfaßt, um den genannten Auslauf mit der genannten Spule in Berührung zu bringen und den genannten Auslauf an der genannten Spule zu befestigen, wenn sich das genannte Einführteil in die genannte Einführstellung bewegt; und eine Zuführvorrichtung (45, 49) zum Zuführen des genannten Photofilms (24, 94, 124, 134), um den genannten Auslauf in einer Aufnahmestellung anzuordnen, in der der genannte Auslauf von dem genannten Aufnahmeendabschnitt des genannten Einführteils aufgenommen wird, **dadurch gekennzeichnet,** daß das genannte Einführteil ein bogenförmiges Profil aufweist und angeordnet ist, sich drehend um die Krümmungsmitte (35a) des genannten bogenförmigen Profils zu bewegen, und der genannte Auslauf beim Ablauf der Bewegung des genannten Einführteils aus der genannten Bereitschaftsstellung in die genannte Einführstellung aufgenommen wird.

2. Eine Photofilmladevorrichtung, wie in Anspruch 1 festgelegt, worin die genannte Zuführvorrichtung (59) angeordnet ist, den genannten Auslauf (134a) in einer die Fortsetzung der genannten Durchgangsöffnung (19) kreuzenden Richtung zuzuführen.

3. Eine Photofilmladevorrichtung, wie in Anspruch 2 festlegte, die des weiteren eine Verschiebevorrichtung (58) umfaßt, um das genannte Einführteil (35, 39) in Richtung zu dem genannten Patronengehäuse (10) zu verschieben, und der genannte Auslauf im Laufe der Verschiebung des genannten Einführteils (35, 39) aufgenommen wird.

4. Eine Photofilmladevorrichtung, wie in Anspruch 2 festgelegt, worin die genannte Zuführvorrichtung (45) angeordnet ist, den genannten Auslauf (24a, 124a, 134a) in Richtung zu der genannten Durchgangsöffnung (19) zuzuführen.

5. Eine Photofilmladevorrichtung, wie in Anspruch 1 festgelegt, worin die genannte Zuführvorrichtung (59) den genannten Auslauf (24a, 124a, 134a) in einer Richtung zuführt, die den bogenförmigen Bewegungsweg des genannten Einführteils (35; 39, 109, 139) kreuzt.

6. Eine Photofilmladevorrichtung, wie in Anspruch 1 festgelegt, worin der genannte Aufnahmeendabschnitt (39a, 109a, 139a) bewirkt, daß die genannte Haltestruktur (21, 101, 121) den genannten Auslauf (24a, 94a, 124a) zurückhält, wenn sich das genannte Einführteil (39, 109, 139) bewegt.

7. Eine Photofilmladevorrichtung, wie in Anspruch 6 festgelegt, worin der genannte Aufnahmeendabschnitt wenigstens eine Klaue (39a, 139a) zum Aufnehmen von wenigstens einem Aufnahmeloch (26, 96, 196) umfaßt, das in dem genannten Auslauf (24a, 94a, 124a) gebildet ist.

8. Eine Vorrichtung zum Entfernen von belichtetem Photofilm (144, 154) aus einer Patrone, wobei die genannte Patrone eine Spule (12, 80, 92, 120) einschließt, die mit einer Haltestruktur (21, 81, 91, 101, 121) zum Halten eines Auslaufs des genannten Photofilms versehen ist, und ein Patronengehäuse (10), das mit einer Spulenkammer, in der die genannte Spule drehbar angeordnet ist, und einer Photofilmdurchgangsöffnung zur Verbindung der genannten Spulenkammer mit dem Äußeren versehen ist; wobei die genannte Vorrichtung zum Entfernen eines Photofilms umfaßt eine Haltevorrichtung (31) zum Halten des genannten Patronengehäuses (10) in einer vorbestimmten Ausrichtung, um die genannte Durchgangsöffnung in einer vorbestimmten Richtung anzuordnen; eine Ziehvorrichtung (60) zum Ziehen des genannten Photofilms bis der genannte Photofilm abgewinkelt vorliegt, so daß eine Wicklung oder weniger auf die genannte Spule gewikkelt bleibt; ein Trennteil (35; 62, 66, 67, 68, 110) zum Trennen des genannten Auslaufs von der genannten Spule, wobei das genannte Trennteil so angeordnet ist, daß es zwischen einer Einführstellung, in der das genannte Trennteil durch die genannte Durchgangsöffnung in die genannte Spulenkammer hindurchgegangen ist und in Berührung mit dem genannten Auslauf gebracht worden ist, und einer Bereitschaftsstellung bewegbar ist, in der das genannte Trennteil aus der genannten Spulenkammer durch die genannte Durchgangsöffnung hindurch herausgezogen worden ist, wobei das genannte Trennteil in die genannte Einführstellung bewegt wird, nachdem der genannte Photofilm abgewickelt vorliegt, so daß eine Umwicklung oder weniger auf die genannte Spule nach dem Ziehen durch die genannte Ziehvorrichtung aufgewickelt zurückbleibt und der genannte Auslauf vom Zurückhalten an der genannten Haltestruktur gelöst wird, während die genannte Spule in dem genannten Patronengehäuse gelassen wird; eine Spulendrehvorrichtung (41a) zum Drehen der genannten Spule, damit wenigstens ein Abschnitt eines Filmvorlaufs des genannten Photofilms durch die genannte Durchgangsöffnung austritt und eine Antriebsvorrichtung zum Bewegen des genannten Trennteils, worin das genannte Trennteil ein bogenförmiges Profil hat und angeordnet ist, sich drehmäßig um die Krümmungsmitte des genannten bogenförmigen Profils zu drehen, und die genannte Antriebsvorrichtung das genannte Drehteil aus der genannten Bereitschaftsstellung in die genannte Einführstellung und dann zurück in die genannte Bereitschaftsstellung bewegt.

9. Eine Vorrichtung zum Entfernen eines Photofilms, wie in Anspruch 8 festgelegt, worin das genannte Trennteil mit einem Ablöseendabschnitt versehen ist, um zwischen eine Halteklaue (21, 101, 121), die in einem Längsschlitz der genannten Spulen gebildet ist, und den genannten Auslauf eingebracht zu werden, um das Zurückhalten freizugeben, und der genannte Ablöseendabschnitt den genannten Schlitz (20, 100, 123) spreizt, um den genannten Auslauf von dem genannten Zurückhalten zu lösen.

10. Eine Vorrichtung zum Entfernen eines Photofilms, wie in Anspruch 9 festgelegt, worin der genannte Ablöseendabschnitt (62a) einen erhöhten Abschnitt (62b) aufweist, um ein Halteloch (25), das in dem genannten Auslauf gebildet ist, mit der genannten Halteklaue (21) außer Eingriff zu bringen, indem er sich auf der genannten Halteklaue bewegt.

11. Eine Vorrichtung zum Entfernen eines Photofilms, wie in Anspruch 9 festgelegt, worin das genannte Trennteil (66) mit einer Öffnung (66a) versehen ist, um den genannten Ablöseendabschnitt flexibel zu machen.

12. Eine Vorrichtung zum Entfernen eines Photofilms, wie in Anspruch 9 festgelegt, worin der genannte Ablöseendabschnitt einen Vorsprung (67a) hat, um ein Halteloch (25), das in dem genannten Auslauf gebildet ist, mit der genannten Halteklaue (21) außer Eingriff zu bringen, indem sich auf der genannten Halteklaue bewegt wird.

13. Eine Vorrichtung zum Entfernen eines Photofilms, wie in Anspruch 9 festgelegt, worin der genannte Ablöseendabschnitt einschließt:
wenigstens eine Nut (68a); und
einen Lappenbereich (68b), der neben der genannten Nut festgelegt ist, um ein Halteloch (25), das in dem genannten Auslauf gebildet ist, außer Eingriff mit der genannten Halteklaue (21) zu bringen, indem sich auf der Halteklaue bewegt wird.

14. Eine Verfahren zum Laden von Photofilm (24, 94, 124, 134) in eine Patrone, wobei die genannte Patrone eine Spule (12, 50, 80, 92, 120), die mit einer Haltestruktur (21, 81, 91, 101, 121) zum Halten eines Auslaufs (24a, 124a_{,} 134a) des genannten Photofilms versehen ist, und ein Patronengehäuse (10) einschließt, das mit einer Spulenkammer, in der die genannte Spule drehbar angeordnet ist, und einer Photofilmdurchgangsöffnung (19) zur Verbindung der genannten Spulenkammer mit dem Äußeren versehen ist; worin ein Schlitz (20, 82, 100, 123) in der genannten Spule gebildet ist, der sich in der Längsrichtung der genannten Spule zur Aufnahme des genannten Auslaufs erstreckt, und die genannte Haltestruktur innerhalb des genannten Schlitzes angeordnet ist; wobei das genannte Photofilmladeverfahren umfaßt:
Zuführen des genannten Photofilms durch die genannte Zuführvorrichtung (59), so daß der genannte Auslauf in einer Aufnahmeposition eingestellt wird;
Bewegen einer Einführvorrichtung (35, 39, 109, 139) drehmäßig um eine Drehmitte (35a), wobei der Weg der genannten Einführvorrichtung den Zuführweg des genannten Auslaufs kreuzt, der durch die genannte Zuführvorrichtung zugeführt wird, wobei der genannte Auslauf durch die genannte Einführvorrichtung in der genannten Aufnahmestellung aufgenommen wird;
Einbringen der genannten Einführvorrichtung in die genannte Patrone gebracht wird, wenn sie durch die genannte Durchgangsöffnung hindurchgeht, so daß der genannte Auslauf in das genannte Patronengehäuse eingeführt wird;
Halten des genannten Auslaufs an der genannten Spule mit der genannten Haltestruktur;
Herausziehen der genannten Einführvorrichtung aus dem genannten Patronengehäuse; und
Drehen der genannten Spule, um den genannten Photofilm um die genannte Spule herumzuwickeln, so daß der genannte Photofilm in dem genannten Patronengehäuse aufgewickelt wird,
**dadurch gekennzeichnet,** daß die genannte Einführvorrichtung ein bogenförmiges Profil aufweist, das als Krümmungsmitte die genannte Drehmitte (35a) hat.

15. Eine Verfahren zum Entfernen von belichtetem Photofilm (144, 154) aus einer Patrone, wobei die Patrone eine Spule (12, 18, 22, 120), die mit Haltestruktur (21, 81, 91, 101, 121) zum Halten eines Auslaufs (24a, 124a, 134a) des genannten Photofilms versehen ist, und ein Patronengehäuse (10) einschließt, das mit einer Spulenkammer, in der die genannte Spule drehbar angeordnet ist, und einer Photofilmdurchgangsöffnung zur Verbindung der genannten Spulenkammer mit dem Äußeren versehen ist; worin ein Schlitz (20, 82, 100, 132) in der genannten Spule gebildet ist, der sich in der Längsrichtung der genannten Spule zur Aufnahme des genannten Auslaufs erstreckt, und die genannte Haltestruktur innerhalb des genannten Schlitzes angeordnet ist; wobei das genannte Verfahren zum Entfernen von Photofilm umfaßt:
Drehen der genannten Spule, damit wenigstens ein Abschnitt eines Filmvorlaufs des genannten Photofilms durch die genannte Durchgangsöffnung austritt;
Herausziehen des genannten Photofilms, bis der genannten Photofilm abgewikkelt anhält, so daß eine Umwicklung oder weniger auf der genannten Spule gewickelt bleibt;
Einbringen einer Trennvorrichtung (35; 62, 66, 67, 68, 110) in das genannte Patronengehäuse, um den genannten Auslauf zu berühren, wenn sie durch die genannte Durchgangsöffnung hindurchgeht;
Lösen des genannten Auslaufs am Zurückhalten an der genannten Haltestruktur durch Verwendung der genannten Trennvorrichtung; und
Herausziehen des genannten Photofilms, um den genannten Photofilm von der genannten Spule zu trennen, worin die genannte Trennvorrichtung ein bogenförmiges Profil hat und so angeordnet ist, daß sie sich drehmäßig um die Krümmungsmitte (35a) des genannten bogenförmigen Profils dreht.

## Revendications

1. Appareil pour charger un film photographique (24, 94, 124, 134) dans une cassette, ladite cassette comprenant une bobine (12, 50, 80, 92, 120) pourvue d'une structure de retenue (21, 48d, 81 , 91 101, 121) pour retenir une queue (24a, 124a, 134a) dudit film photographique, et une coque de cassette (10) pourvue d'une chambre à bobine dans laquelle ladite bobine est disposée en rotation, et d'un orifice de passage pour film photographique (19) pour faire communiquer ladite chambre à bobine vers l'extérieur ; ledit appareil de chargement de film photographique comprenant :
- des moyens de maintien (31) pour tenir ladite coque de cassette dans une orientation prédéterminée de manière à positionner ledit orifice de passage dans une direction prédéterminée ;
- un élément d'introduction (35 ; 39, 109, 139) pour introduire ladite queue dans ladite coque de cassette, ledit élément d'introduction étant agencé de manière à être déplacé entre une position d'introduction dans laquelle ledit élément d'introduction a été passé à travers ledit orifice de passage jusque dans ladite chambre à bobine, et une position d'attente dans laquelle ledit élément d'introduction a été tiré hors de ladite chambre à bobine à travers ledit orifice de passage ; des moyens de rotation de bobine (41a) pour faire tourner ladite bobine afin d'enrouler ledit film photographique autour de ladite bobine, ledit élément d'introduction comprenant une partie terminale de saisie (39a, 109a, 139a) pour saisir ladite queue de manière à amener ladite queue jusqu'en contact avec ladite bobine, et à monter ladite queue sur ladite bobine lorsque ledit élément d'introduction se déplace jusqu'à ladite position d'introduction ; et
- des moyens d'amenée (45, 49) pour amener ledit film photographique (24, 94, 124, 134) de manière à placer ladite queue dans une position de saisie dans laquelle ladite queue est saisie par ladite partie terminale de saisie dudit élément d'introduction,
caractérisé en ce que ledit élément d'introduction a un profil arqué, et en ce qu'il est agencé pour se déplacer en rotation autour du centre de courbure (35a) dudit profil arqué, et ladite queue est saisie dans le cours du mouvement dudit élément d'introduction depuis ladite position d'attente jusqu'à ladite position d'introduction.

2. Appareil de chargement de film photographique selon la revendication 1, dans lequel lesdits moyens d'amenée (59) sont agencés pour amener ladite queue (134a) dans une direction qui croise le prolongement dudit orifice de passage (19).

3. Appareil de chargement de film photographique selon la revendication 2, comprenant en outre des moyens de coulissement (58) pour faire coulisser ledit élément d'introduction (35, 39) vers ladite coque de cassette (10), et ladite queue est saisie dans la course du coulissement dudit élément d'introduction (35, 39).

4. Appareil de chargement de film photographique selon la revendication 2, dans lequel lesdits moyens d'amenée (45) sont agencés de manière à amener ladite queue (24a, 124a, 134a) vers ledit orifice de passage (19).

5. Appareil de chargement de film photographique selon la revendication 1, dans lequel lesdits moyens d'amenée (59) amènent ladite queue (24a, 124a, 134a) dans une direction qui croise le trajet de déplacement arqué dudit élément d'introduction (35 ; 39, 109, 139).

6. Appareil de chargement de film photographique selon la revendication 1, dans lequel ladite partie terminale de saisie (39a, 109a, 139a) amène ladite structure de retenue (21, 101, 121) à retenir ladite queue (24a, 124a, 134a) lorsque ledit élément d'introduction (39, 109, 139) se déplace.

7. Appareil de chargement de film photographique selon la revendication 6, dans lequel ladite partie terminale de saisie comprend au moins une griffe (39a, 139a) pour saisir au moins un trou de saisie (26, 96, 126) formé dans ladite queue (24a, 94a, 124a).

8. Appareil pour enlever un film photographique exposé (144, 154) depuis une cassette, ladite cassette comprenant une bobine (12, 80, 92, 120) pourvue d'une structure de retenue (21, 81, 91, 101, 121) pour retenir une queue dudit film photographique, et une coque de cassette (10) pourvue d'une chambre à bobine dans laquelle ladite bobine est disposée en rotation, et d'un orifice de passage pour film photographique afin de faire communiquer ladite chambre à bobine vers l'extérieur ; ledit appareil d'enlèvement de film photographique comprenant des moyens de maintien (31) pour tenir ladite coque de cassette (10) dans une orientation prédéterminée de manière à positionner ledit orifice de passage dans une direction prédéterminée ; des moyens de tirage (60) pour tirer ledit film photographique jusqu'à ce que ledit film automatique photographique soit déroulé de sorte qu'il reste une spire ou moins enroulée sur ladite bobine ; un élément de séparation (35 ; 62, 66, 67, 68, 110) pour séparer ladite queue de ladite bobine, ledit élément de séparation étant agencé de manière à être déplacé entre une position d'introduction dans laquelle ledit élément de séparation a été passé à travers ledit orifice de passage jusque dans ladite chambre à bobine et amené en contact avec ladite queue, et une position d'attente dans laquelle ledit élément de séparation a été tiré hors de ladite chambre à bobine à travers ledit orifice de passage, ledit élément de séparation étant déplacé jusqu'à ladite position d'introduction après que le film photographique soit déroulé de sorte qu'il reste une spire ou moins enroulée sur ladite bobine après le tirage par lesdits moyens de tirage, et libérant ladite queue de la rétention sur ladite structure de rétention tout en laissant ladite bobine dans ladite coque de cassette ; des moyens de rotation de bobine (41a) pour faire tourner ladite bobine afin qu'au moins une partie d'une amorce dudit film photographique sorte à travers ledit orifice de passage, et des moyens d'entraînement pour déplacer ledit élément séparateur, dans lequel ledit élément séparateur présente un profil arqué et est agencé pour se déplacer en rotation autour du centre de courbure dudit profilé, et en ce que lesdits moyens d'entraînement déplacent ledit élément de séparation depuis ladite position d'attente jusqu'à ladite position d'introduction, puis en retour jusqu'à ladite position d'attente.

9. Appareil d'enlèvement de film photographique selon la revendication 8, dans lequel ledit élément de séparation est pourvu d'une partie terminale de libération destinée à être entrée entre une griffe de retenue (21, 101, 121), formée dans une fente longitudinale de ladite bobine, et ladite queue afin de libérer la rétention, et ladite partie terminale de libération écartant ladite fente (20, 100, 123) de manière à libérer ladite queue de ladite rétention.

10. Appareil d'enlèvement de film photographique selon la revendication 9, dans lequel ladite partie terminale de libération (62a) comporte une partie relevée (62b) pour dégager un trou de retenue (25) formé dans ladite queue par rapport à ladite griffe de retenue (21) en passant sur ladite griffe de retenue.

11. Appareil d'enlèvement de film photographique selon la revendication 9, dans lequel ledit élément de séparation (66) est pourvu d'une ouverture (66a) qui rend flexible ladite partie terminale de libération.

12. Appareil d'enlèvement de film photographique selon la revendication 9, dans lequel ladite partie terminale de libération comporte une projection (67a) pour dégager un trou de retenue (25) formé dans ladite queue par rapport à ladite griffe de retenue (21) en passant sur ladite griffe de retenue.

13. Appareil d'enlèvement de film photographique selon la revendication 9, dans lequel ladite partie terminale de libération inclut :
- au moins une gorge (68a) ; et
- une partie de volet (68b) définie à côté de ladite gorge pour dégager un trou de retenue (25) formé dans ladite queue par rapport à ladite griffe de retenue (21) en passant sur ladite griffe de retenue.

14. Procédé pour charger un film photographique (24, 94, 124, 134) dans une cassette, ladite cassette comprenant une bobine (12, 50, 80, 92, 120) pourvue d'une structure de retenue (21, 81 , 91, 101, 121) pour retenir une queue (24a, 124a, 134a) dudit film photographique, et une coque de cassette (10) pourvue d'une chambre à bobine dans laquelle ladite bobine est disposée en rotation et d'un orifice de passage de film photographique (19) pour faire communiquer ladite chambre à bobine vers l'extérieur ; dans lequel une fente (20, 82, 100, 123) est formée dans ladite bobine en s'étendant dans la direction longitudinale de ladite bobine pour recevoir ladite queue, et ladite structure de retenue est agencée à l'intérieur de ladite fente ; ledit procédé de chargement de film photographique comprenant les opérations suivantes :
- on amène ledit film photographique à l'aide de moyens d'amenée (59), de manière à placer ladite queue dans une position de saisie ;
- on déplace une monture d'introduction (35, 39, 109, 139) en rotation autour d'un centre (35a) de rotation, de sorte que le trajet de ladite monture d'introduction croise le trajet d'amenée de ladite queue amenée par lesdits moyens d'amenée, ladite queue étant saisie par ladite monture d'introduction dans ladite position de saisie ;
- on amène ladite monture d'introduction jusque dans ladite cassette, en passant à travers ledit orifice de passage, de façon à introduire ladite queue dans ladite coque de cassette ;
- on retient ladite queue sur ladite bobine avec ladite structure de retenue ;
- on tire ladite monture d'introduction hors de ladite coque de cassette ; et
- on fait tourner ladite bobine afin d'enrouler ledit film photographique autour de ladite bobine, de manière à enrouler ledit film photographique dans ladite coque de cassette,
caractérisé en ce que ladite monture d'introduction a un profil arqué ayant ledit centre de rotation (35a) comme centre de courbure.

15. Procédé pour enlever un film photographique exposé (144, 154) hors d'une cassette, ladite cassette comprenant une bobine (12, 80, 92, 120) pourvue d'une structure de retenue (21, 81, 91, 101, 121) pour retenir une queue (24a, 124a, 134a) dudit film photographique, et une coque de cassette (10) pourvue d'une chambre à bobine dans laquelle ladite bobine est disposée en rotation, et d'un orifice de passage de film photographique pour faire communiquer ladite chambre à bobine vers l'extérieur ; dans lequel une fente (20, 82, 100, 123) est formée dans ladite bobine en s'étendant dans la direction longitudinale de ladite bobine pour recevoir ladite queue, et ladite structure de retenue est agencée à l'intérieur de ladite fente ; ledit procédé d'enlèvement de film photographique comprenant des opérations consistant à :
- faire tourner ladite bobine afin qu'au moins une partie d'une amorce dudit film photographique sorte à travers ledit orifice de passage ;
- tirer ledit film photographique jusqu'à ce que ledit film photographique soit déroulé de sorte qu'il reste une spire ou moins enroulée sur ladite bobine ;
- amener une monture de séparation (35 ; 62, 66, 67, 68, 110) jusque dans ladite coque de cassette pour venir en contact avec ladite queue, en passant à travers ledit orifice de passage ;
- libérer ladite queue de la rétention sur ladite structure de rétention en utilisant ladite monture de séparation ; et
- tirer ledit film photographique vers l'extérieur de façon à séparer ledit film photographique par rapport à ladite bobine, dans lequel ladite monture de séparation a un profil arqué et celle-ci est agencée de façon à se déplacer en rotation autour du centre de courbure (35a) dudit profil arqué.
